# EUROPEAN PATENT APPLICATION

(11) **EP 4 841 462 A1**
(43) Date of publication of application: **18.11.2026**
(21) Application number: 26178494.6
(22) Date of filing: 13.05.2026
(51) Int. Cl.: G06F 16/2452

(54) **NATURAL LANGUAGE QUERY PROCESSING WITH HYBRID SEARCH AND RANKED FILTERING**

(30) Priority: 14.05.2025 EP 25382488
(71) Applicant: ADP, Inc., Roseland, NJ 07068 (US)
(72) Inventor: DE OLIVEIRA TRAJANO, Douglas, Roseland, 07068 (US); STEIN, Roger, Roseland, 07068 (US); NAVARRO, Diego, Roseland, 07068 (US)
(74) Representative: Morrall, Jonathan Ian McLachlan

(57) **Abstract**

A system can receive, from a client device, a query in a natural language format for execution on a database. The system can identify entities mapped to filter values stored in the database by extracting entities from the query using a parse operation. The system can identify the filter values by conducting a hybrid search on the database. The hybrid search can include a keyword-based search to identify filter values associated with the entities, and a semantic-based search to determine a relevance score for each filter value with respect to the query. The system can rank each filter value based on the query and the relevance score. The system can generate, based on the rank of at least one filter value, a second query for execution on the database. The system can provide data retrieved from the database by executing the second query to the client device.

## Description

### CROSS-REFERENCES TO RELATED APPLICATIONS

This application claims benefit and priority under 35 U.S.C. § 119 to European (EP) Patent Application No. 25382488.2, filed May 14, 2025, which is hereby incorporated by reference herein in its entirety.

### TECHNICAL FIELD

This application is generally related to computing technology, particularly natural language processing, and, more particularly, to natural language query processing with hybrid search and ranked filtering.

### BACKGROUND

Natural language processing can be used for efficient information storage, retrieval, and analysis across various fields. For example, natural language processing systems are used to process user prompts and provide contextually relevant responses. However, due to variability in user input, such as differences in lexical choice, syntax, or semantic intent, it can be challenging to efficiently, reliably, or accurately provide the requested information, let alone execute operations in accordance with the requested input.

### SUMMARY

Aspects of the technical solutions described herein address challenges associated with converting natural language input into database queries, particularly with respect to accurately identifying and applying filters for data retrieval from a target database. Text-to-query systems facilitate database interaction through natural language and abstract technical query formulation from end users. However, such systems experience multiple challenges when extracting accurate filter values (e.g., values associated with filter categories or database columns during query generation) due to the variability and ambiguity in user phrasing, particularly across diverse data environments. Such challenges are further amplified when processing terminology that is specific to a domain, or expressions that do not directly map to database schema elements. Moreover, high-cardinality attributes, such as departments, product codes, or user identifiers, which refer to fields in a dataset with a large number of distinct filter values, contribute to the complexity of filter identification, as lexical overlap and contextual ambiguity can result in incorrect or incomplete filter mapping. For example, a query such as "show me all employees in 7AX" may ambiguously reference filter values in multiple columns, such as department, business unit, or location.

Additionally, machine learning models such as Seq2SQL, which generate structured queries (e.g., SQL) from natural language input using sequence-to-sequence architectures, experience technical challenges in accommodating domain-specific expressions and variations in user phrasing, particularly when processing complex queries that involve multiple filtering conditions or non-standard vocabulary. Supervised learning models used in such systems rely on extensive annotated datasets and are limited in adaptability to new domains and unseen data distributions. Such reliance leads to model degradation in real-world applications, where training data quickly becomes outdated due to evolving user behavior or changes in underlying datasets. Furthermore, while large language models (LLMs) provide improved understanding of natural language semantics, such models' inability to directly reference or validate against existing filter values established in the database introduces a significant risk of generating structurally valid but semantically incorrect queries. Such disconnect between language understanding and schemagrounded data awareness results in rigid, error-prone systems that lack robustness in heterogeneous data settings, such as environments including different database schemas, data structures, field naming conventions, or domain-specific filter categories across multiple datasets. Furthermore, the reliance on text search, regular expressions, and input preprocessing limits the ability of systems to dynamically validate filter values based on contextual relevance, thereby impeding scalability and resulting in inconsistent query generation in multi-schema environments.

The technical solutions described herein address the technical challenges of accurate filter extraction in text-to-query systems by implementing a modular architecture that integrates entity recognition, hybrid search, and relevance scoring. A modular architecture can refer to an architecture in which entity recognition, hybrid search, relevance scoring, and related query processing functions are implemented as separate components that can operate together and can be independently updated, replaced, or scaled. The technical solutions provide a system architecture for extracting categorical filter values from natural language queries, improving precision, efficiency, and scalability in text-to-query processing. In this regard, the system executes an entity recognition (ER) model, implemented using an LLM accessible via a cloud-based service, to parse natural language queries and identify candidate entities and associated actions. In response to identifying the candidate entities, the system initiates a hybrid search process to identify and retrieve candidate filter values associated with the identified entities from a target database. The hybrid search integrates two approaches: a keyword-based search to retrieve filter values exhibiting lexical correspondence with the input query, and a semantic search utilizing vector embeddings. The system normalizes and combines the respective search scores using weighting functions to improve overall relevance ranking. The system balances lexical similarity and contextual understanding by computing a relevance score based on the combined results. Such dual-layer search facilitates the retrieval of candidate filter values across exact-match and semantically similar terms, particularly in the presence of ambiguous phrasing or high-cardinality data attributes.

Furthermore, to refine candidate filter values retrieved from the target database, post-processing logic performs deduplication, flags previously validated filters, and invokes a relevance scoring model to classify the contextual relevance of each candidate filter value with respect to the input query. The relevance model, implemented using an LLM hosted through a cloud-based service, uses a prompt-based classification task that adds an additional layer of filtering to distinguish contextually aligned filter values from unrelated candidates. The entity recognition and relevance models can be fine-tuned with domain-specific prompts and few-shot examples to support domain adaptation, improving precision in filter selection without heavy retraining. As a result, the technical solutions described herein support prompt-based large language models for entity identification and relevance determination across domains. Post-processing logic can further apply thresholds to discard filters below a relevance confidence level and validate candidate filters against domain-specific constraints. The post-processing logic also reduces candidate filters provided to the relevance model, thereby reducing inference latency associated with downstream contextual classification.

The relevance model classifies each filter value into multiple relevance levels and ranks them based on their contextual alignment with the user query and the respective relevance score. Filter values are ranked into various categories, such as very relevant, relevant, and irrelevant. Filter ranked or classified as very_relevant are automatically selected, relevant filters are presented to the user for confirmation, and irrelevant filters are excluded. For example, filter values classified as highly relevant are assigned the highest rank and are automatically selected for execution in a structured query format, which improves the accuracy of the resulting query and reduces reliance on manual user input during filter confirmation. Filter values exhibiting levels of ambiguity are provided to the client device for user confirmation or clarification, thereby facilitating user driven validation and enhancing the reliability of the filter extraction process in variable linguistic contexts. Filter values classified as irrelevant are excluded from further processing, which conserves computational resources and improves system efficiency.

The system architecture supports integration with text-to-query infrastructures and is configured for deployment in environments with heterogeneous schema configurations. Such a modular framework allows for reliable filter identification even under domain-specific constraints, ambiguous phrasing, and high-cardinality attribute spaces. The technical solutions described herein provide a modular architecture that combines large language model-based entity recognition, hybrid search with vector embeddings, and contextual relevance scoring to improve precision and recall in identifying database filters. Such an approach reduces reliance on user interaction for filter confirmation and supports integration with diverse data environments.

The system design can be extended to incorporate an optimized embedding index for faster semantic retrieval, an acronym expansion mechanism to improve entity identification and retrieval coverage, and alternative model backends to reduce inference latency. The acronym expansion mechanism identifies abbreviated or shorthand query terms, generates one or more expanded forms using a domain-specific lexicon, historical usage data, or a machine learning model, and provides the original term and the expanded form to the entity recognition model, the hybrid search, or both, to improve retrieval coverage for abbreviated user phrasing. In some cases, an indexing pipeline maintains an up-to-date search index synchronized with client data, and a runtime API orchestrates the flow of operations from entity recognition to relevance scoring. The system can implement Bayesian optimization for hyperparameter tuning to improve model performance based on task-specific metrics. The combination of entity recognition, hybrid retrieval, and contextual scoring in the technical solutions described herein provides scalable and accurate filter extraction for structured query generation across diverse data environments. Additionally, the system achieves high precision and recall while maintaining computational efficiency. Furthermore, the system architecture adapts to domain-specific requirements and processes ambiguous phrasing, thereby providing a foundation for text-to-query processing.

An aspect of the technical solutions described herein is directed to a system. The system includes one or more processors coupled with memory. The system can receive, from a client device, a query in a natural language format for execution on a database. The system can identify one or more entities that map to one or more filter values stored in the database by extraction of one or more entities from the query using a parse operation. The system can identify the one or more filter values by conducting a hybrid search on the database. The hybrid search can include a keyword-based search to identify a set of filter values respectively associated with the one or more entities. The hybrid search can further include a semantic-based search to determine a respective relevance score for each filter value of the set of filter values with respect to the query. The system can rank each filter value of the set of filter values based on the query and the respective relevance score. The system can generate, based on the rank of at least one filter value, a second query for execution on the database. The system can provide, to the client device, an output including data retrieved from the database by executing the second query.

The system can rank each filter value of the set of filter values into a first rank, a second rank, and a third rank. Each rank can correspond to a respective range of relevance scores with respect to the query. The system can select, for inclusion in the first rank, one or more filter values having respective relevance scores that exceed a first threshold indicative of a highest relevance to the query. The system can generate the second query for execution on the database using the one or more filter values included in the first rank. The system can select, for inclusion in the second rank, one or more filter values having respective relevance scores that are between the first threshold and a second threshold, where the second threshold is lower than the first threshold. The system can provide, to the client device, a content item identifying the one or more filter values included in the second rank. The system can generate, upon receiving user input indicating inclusion of the one or more filter values identified in the content item, the second query for execution on the database using the one or more filter values. The content item can include, for each of the one or more filter values included in the second rank, a corresponding filter identifier and an indication of the second rank. The system can provide the content item to the client device as at least one of a textual list or an interactive element.

The system can select, for inclusion in the third rank, one or more filter values having respective relevance scores that are below the second threshold. The system can exclude the one or more filter values included in the third rank from use in generating the second query for execution on the database. The system can determine the respective relevance score for each filter value based on a weighted combination of the keyword-based search and the semantic-based search executed during the hybrid search. The keyword-based search can contribute a higher weight to the respective relevance score based on the query corresponding to lexical identity with the filter value. The semantic-based search can contribute a higher weight to the respective relevance score based on the query including semantic equivalents relevant to the filter value.

The system can generate, for each of a plurality of filter values established in the database, a text string by concatenating a corresponding filter category and the filter value. The system can generate a respective vector embedding for each text string. The system can store the respective vector embeddings in a search index in association with metadata, where the semantic-based search can be executed on the search index based on the respective vector embeddings. The system can normalize, prior to determining the respective relevance score for each filter value of the set of filter values, a first score obtained from the keyword-based search and a second score obtained from the semantic-based search. The system can generate, for each of the one or more entities identified from the query, a respective keyword query. The system can retrieve, from the database, one or more filter values for each of the one or more entities using the respective keyword query. The system can store an association between each retrieved filter value and the entity corresponding to the respective keyword query.

The system can remove, from the set of filter values, one of a first filter value or a second filter value having a same value prior to ranking each filter value of the set of filter values, where removing the one of the first filter value or the second filter value can reduce a number of candidate filter values processed during execution of the second query. The system can validate a model output of a machine learning model against a schema specifying fields corresponding to the one or more entities and an action type. The system can generate, by the machine learning model, a second model output satisfying the schema by resubmitting the query to the machine learning model in response to the model output not satisfying the schema.

The system can map each filter value, for generating the second query, to at least one of a database field identifier, a filter category code, or a filter value code. The system can determine, for each mapped filter value, an associated action indicating inclusion of the mapped filter value. The system can generate the second query to include one or more query conditions including the mapped filter value according to the associated action. To generate the second query, the system can further map each filter value to at least one of a database field identifier, a filter category code, or a filter value code, and determine, for each mapped filter value, an associated action indicating exclusion of the mapped filter value, where the second query can include one or more query conditions excluding the mapped filter value according to the associated action.

An aspect of the technical solutions described herein is directed to a method. The method can include receiving, from a client device, a query in a natural language format for execution on a database. The method can include identifying one or more entities that map to one or more filter values stored in the database by extraction of one or more entities from the query using a parse operation. The method can include identifying the one or more filter values by conducting a hybrid search on the database. The hybrid search can include a keyword-based search to identify a set of filter values respectively associated with the one or more entities. The hybrid search can further include a semantic-based search to determine a respective relevance score for each filter value of the set of filter values with respect to the query. The method can include ranking each filter value of the set of filter values based on the query and the respective relevance score. The method can include generating, based on the rank of at least one filter value, a second query for execution on the database. The method can include providing, to the client device, an output including data retrieved from the database by executing the second query.

The method can include ranking each filter value of the set of filter values into a first rank, a second rank, and a third rank. Each rank can correspond to a respective range of relevance scores with respect to the query.

An aspect of this disclosure can be directed to a non-transitory computer readable medium, including one or more instructions stored thereon and executable by a processor. The processor can receive, from a client device, a query in a natural language format for execution on a database. The processor can identify one or more entities that map to one or more filter values stored in the database by extraction of one or more entities from the query using a parse operation. The processor can identify the one or more filter values by conducting a hybrid search on the database. The hybrid search can include a keyword-based search to identify a set of filter values respectively associated with the one or more entities. The hybrid search can further include a semantic-based search to determine a respective relevance score for each filter value of the set of filter values with respect to the query. The processor can rank each filter value of the set of filter values based on the query and the respective relevance score. The processor can generate, based on the rank of at least one filter value, a second query for execution on the database. The processor can provide, to the client device, an output including data retrieved from the database by executing the second query.

### BRIEF DESCRIPTION OF THE DRAWINGS

These and other aspects and features of the present implementations are depicted by way of example in the figures discussed herein. Present implementations can be directed to, but are not limited to, examples depicted in the figures discussed herein. Thus, this disclosure is not limited to any figure or portion thereof depicted or referenced herein, or any aspect described herein with respect to any figures depicted or referenced herein.
FIG. 1 depicts an example system, in accordance with some implementations.
FIGS. 2A-2B depict an example process for processing a natural language query with hybrid search and ranked filtering, in accordance with some implementations.
FIG. 3 depicts a list of identified entities and associated actions, in accordance with some implementations.
FIG. 4 depicts an example filter object stored in a search index, in accordance with some implementations.
FIG. 5 depicts an example method of processing a natural language query with hybrid search and ranked filtering, in accordance with some implementations.
FIG. 6 depicts a block diagram of an example computing system for implementing the embodiments of the present solution, including, for example, the system depicted in FIG. 1, the process depicted in FIGS. 2A-2B, and the method depicted in FIG. 5.

### DETAILED DESCRIPTION

Aspects of the technical solutions are described herein with reference to the figures, which are illustrative examples of this technical solution. The figures and examples below are not meant to limit the scope of the technical solutions to the present implementations or to a single implementation. Several other implementations in accordance with present implementations are possible, for example, by way of interchange of some or all of the described or illustrated elements. Where certain elements of the present implementations can be partially or fully implemented using known components, only those portions of such known components that are necessary for an understanding of the present implementations are described, and detailed descriptions of other portions of such known components are omitted to not obscure the present implementations. Terms in the specification and claims are to be ascribed no uncommon or special meaning unless explicitly set forth herein. Further, the technical solutions and the present implementations encompass present and future known equivalents to the known components referred to herein by way of description, illustration, or example.

The technical solutions described in the present application provide specific improvements to the operation of computing systems that perform natural language query processing for database retrieval by identifying candidate entities from user queries, executing hybrid retrieval of candidate filter values, and ranking the candidate filter values for structured query generation prior to database execution. The components of the computing system include query receivers, entity recognition models, keyword-based retrieval components, semantic search components, filter evaluators, ranking models, and query generators that collaboratively perform query receipt, entity extraction, candidate retrieval, score normalization, candidate refinement, contextual relevance classification, and query generation, among others.

In some implementations, the machine learning based functionality described herein is implemented using a plurality of machine learning models that perform logically distinct roles within the overall query processing workflow, rather than a single monolithic model. For example, an entity recognition model is configured to parse a natural language query and identify entities and associated actions expressed therein, while a semantic retrieval or embedding model is configured to generate vector representations and compute semantic similarity scores used during hybrid search. A separate relevance classification or ranking model can be configured to evaluate candidate filter values and assign relevance categories based on the query context and associated relevance scores. Although these models are described as performing different functions, in some implementations two or more of the described functions can be performed by a single machine learning model, by different instances of a common model architecture, or by models executed at different stages using different prompts, inputs, or configurations. Accordingly, and in some cases, execution by a machine learning model can refer to or include execution by one or more machine learning models operating cooperatively within the described processing sequence.

Unlike approaches that rely on rule-based text matching, schema-agnostic language generation, or standalone sequence-to-query models that do not validate against existing filter values, the technical solutions implement a system that integrates prompt-based entity recognition, hybrid lexical and semantic retrieval, and ranked filter selection for refining database query generation in response to ambiguous phrasing, domain-specific terminology, or heterogeneous schema configurations. Such systems support scalable, accurate, and resource-efficient extraction of categorical filter values while maintaining low latency performance across diverse data environments. The combination of entity recognition models, hybrid retrieval, and contextual relevance ranking provides a query processing system with technical benefits including improved precision, recall, adaptability, maintainability, and scalability for text-to-query processing in computing environments. Furthermore, because retrieval behavior, ranking behavior, and candidate evaluation behavior can be adjusted through model configuration, indexed representations, or threshold settings rather than changes to the underlying query-processing workflow, the system provides a configurable mechanism for adapting filter extraction behavior without modification of the processing sequence.

In some implementations, the processing sequence described herein improves the operation of computing systems that perform natural language query processing by constraining machine learning interpretation using filter values that are grounded in a database and by reducing computational overhead associated with downstream inference. Rather than generating a structured query directly from unbounded natural language text, the computing system described herein can first retrieve a bounded candidate set of filter values that are established in the database and stored in indexed data structures, and then compute relevance scores for the candidate filter values using a normalized and weighted combination of lexical relevance scores and semantic similarity scores. By performing post-processing operations that include deduplication, threshold based pruning, and tiered relevance classification prior to contextual relevance determination, the computing system reduces the number of candidate filter values provided to subsequent machine learning model executions, thereby reducing inference latency, limiting erroneous filter selection, and improving reliability of generated queries. Additionally, validation of structured outputs against predefined schemas and resubmission logic can further constrain model behavior to produce results that are compatible with the database. These operations can collectively improve query execution accuracy, system responsiveness, and scalability in heterogeneous data environments, including, for example, for datasets having high-cardinality filter attributes and ambiguous user phrasing.

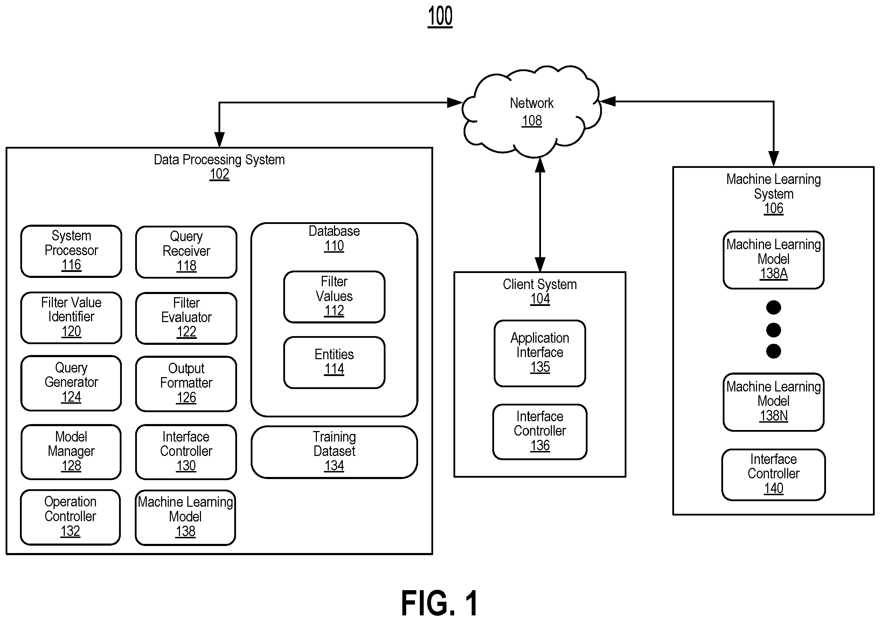

FIG. 1 depicts an example system according to one or more aspects of the technical solutions described herein. As illustrated by way of example in FIG. 1, a system 100 can include one or more of a data processing system 102, a client system 104, and a machine learning system 106. One or more components of the system 100 can communicate via network 108.

The data processing system 102 can include computing resources configured to execute data processing operations and manage administrative workflows. The data processing system 102 can include a physical computer system operatively coupled or couplable with one or more components of the system 100. The data processing system 102 can include, host, or be hosted by or on a cloud system, a server, a distributed remote system, or any combination thereof. The data processing system 102 can include a virtual computing system, an operating system, and a communication bus to effect communication and processing. The data processing system 102 can include physical infrastructure, such as physical servers, storage devices, and network equipment housed in data centers. The data processing system 102 can include a virtual computing system, which can include cloud-based virtual machines or containers for running applications and services. The data processing system 102 can include an operating system that can function as the core manager, allocating resources, configuring processes, and maintaining seamless interaction between hardware and applications. The data processing system 102 can include a communication bus that can facilitate communication between different components within the system. The data processing system 102 can connect with external systems to allow for data exchange and service delivery to end users.

The data processing system 102 can be, include, execute, or host a payroll system configured to manage employee compensation, deductions, tax calculations, and other payrollrelated updates. The data processing system 102 can be, include, execute, or host a human resources (HR) system configured to manage employee information, including personal details, job history, performance reviews, benefits enrollment, and beneficiary designations, among others. The data processing system 102 can be, include, execute, or host a talent management system configured to manage employee talent, including recruitment, performance management, training, and succession planning, among others. The data processing system 102 can be or include a time and benefits administration system configured to manage employee time tracking, leave requests, vacation time, sick leave, and changes to benefits selections, among others.

The data processing system 102 can be, include, execute, or host a compliance system that can manage jurisdiction dependent compliance requirements, filing obligations, reporting obligations, regulatory updates, policy enforcement, audit support, or combinations thereof. The data processing system 102 can be, include, execute, or host a benefits system that can manage benefits eligibility, benefits enrollment, employer or employee contributions, plan administration, or jurisdiction dependent benefits rules, among others. The data processing system 102 can be, include, execute, or host an entitlement processing system that can determine, apply, or administer entitlements associated with leave, wage replacement, reimbursements, allowances, credits, subsidies, social programs, or other eligibility-based outcomes. The data processing system 102 can be, include, execute, or host a non-payroll rule execution system that can apply jurisdiction dependent rules to non-payroll operations, including compliance workflows, eligibility determinations, contribution processing, reporting actions, access decisions, or policy-driven administrative actions. The data processing system 102 can be, include, execute, or host an enterprise resource planning (ERP) system that can coordinate payroll functions, human resources functions, accounting functions, procurement functions, workforce administration functions, or other enterprise operations across one or more jurisdictions. The data processing system 102 can be a more generalized administrative system that incorporates functionalities from multiple domain-specific systems. In certain cases, the data processing system 102 can support deployment of the same query-processing workflow across multiple internal platform environments while maintaining the same processing sequence. In certain cases, additional internal platform environments can be supported without modification of the underlying query processing workflow. The architecture and configuration of the data processing system 102 can be determined based on organizational requirements, data complexity, and the level of interoperability desired between various administrative functions.

The client system 104 (also referred to herein as a client device 104) can include a computing system that can be used to access the functionality of the data processing system 102 and the machine learning system 106. The client system 104 can include a smart phone, mobile device, laptop computer, desktop computer, one or more servers, or any other type of computing device. The client system 104 can include at least one processor and a memory, e.g., a processing circuit. The memory can store processor-executable instructions that, when executed by the processor, cause the processor to perform one or more of the operations described herein. The processor can include a microprocessor, an ASIC, an FPGA, etc., or combinations thereof. The memory can include, but is not limited to, electronic, optical, magnetic, or any other storage or transmission device capable of providing the processor with program instructions. The memory can further include a floppy disk, CD-ROM, DVD, magnetic disk, memory chip, ASIC, FPGA, ROM, RAM, EEPROM, EPROM, flash memory, optical media, or any other suitable memory from which the processor can read instructions. The instructions can include code from any suitable computer programming language.

The client system 104 can include one or more devices to receive input from a user or to provide output to a user. For example, the output capabilities of the client system 104 can be presented through a display device that provides visual feedback to the user. The display device can enhance the user experience with electronic displays, such as liquid crystal displays (LCD), light-emitting diode (LED) displays, or organic light-emitting diode (OLED) displays. The electronic displays can implement interactive features, including capacitive or resistive touch input, allowing for multi-touch functionality. The input functionalities can include a keyboard, mouse, or an integrated touch-sensitive panel on the display device, but are not limited thereto. Each client device 104 can be associated with an identifier used to identify devices or user profiles operating the client devices 104. The identifier can be of one or more forms, such as a device ID, which can be a code assigned to the client device 104 by the manufacturer or operating system, a MAC address, which can be a hardware address assigned to the client device's network interface, or an IP address, which can identify the client device 104 on a network. The identifier can be a user ID associated with the user profile operating the client device 104, or a session ID, which can be a temporary identifier assigned to a specific session. Other identifiers, such as a serial number, can be used depending on the system and device configuration.

The machine learning system 106 can include a cloud system, a server, a distributed remote system, or any combination thereof that can execute, host, or provide access to one or more machine learning models138A-138N (also referred to herein as a machine learning model 138). The machine learning system 106 can include, but is not limited to, at least, central processing unit (CPU), graphics processing unit (GPU), tensor processing units (TPUs), or the like. The machine learning system 106 can include a memory operable to store one or more instructions for operating components of the machine learning system 106 or operating components operably coupled to the machine learning system 106. The machine learning system 106 can be internal to the data processing system 102. The machine learning system 106 can exist external to the data processing system 102 and can be accessed via the network 108. The machine learning system 106 implements or otherwise provides access to one or more application programming interfaces (APIs), via which the data processing system 102 or the client system 104 can access the one or more machine learning models 138 or other functionality of the machine learning system 106.

The network 108 can include any type or form of network. The geographical scope of the network 108 can vary widely, and the network 108 can include a body area network (BAN), a personal area network (PAN), a local-area network (LAN), e.g., Intranet, a metropolitan area network (MAN), a wide area network (WAN), or the Internet. The topology of the network 108 can be of any form and can include, e.g., any of the following: point-to-point, bus, star, ring, mesh, or tree. The network 108 can include an overlay network that is virtual and sits on top of one or more layers of other networks 108. The network 108 can be of any such network topology as known to those ordinarily skilled in the art capable of supporting the operations described herein. For example, the network 108 can be any form of computer network that can relay information among the data processing system 102 and the machine learning system 106. The network 108 can utilize different techniques and layers or stacks of protocols, including, e.g., the Ethernet protocol, the Internet protocol suite (TCP or IP), the ATM (Asynchronous Transfer Mode) technique, the SONET (Synchronous Optical Networking) protocol, or the SD (Synchronous Digital Hierarchy) protocol. The TCP or IP Internet protocol suite can include the application layer, transport layer, Internet layer (including, e.g., IPv6), or the link layer. The network 108 can include a type of broadcast network, a telecommunications network, a data communication network, or a computer network.

The data processing system 102 can include, interface with, communicate with, or otherwise utilize a database 110. The database 110 can be a computer-readable memory that can store or maintain any of the information described herein. The database 110 can store data associated with the system 100. The database 110 can include one or more hardware memory devices to store binary data, digital data, or the like. The database 110 can include one or more electrical components, electronic components, programmable electronic components, reprogrammable electronic components, integrated circuits, semiconductor devices, flip flops, arithmetic units, or the like. The database 110 can include at least one of a non-volatile memory device, a solid-state memory device, a flash memory device, or a NAND memory device. The database 110 can include one or more addressable memory regions disposed on one or more physical memory arrays. A physical memory array can include a NAND gate array disposed on, for example, at least one of a particular semiconductor device, an integrated circuit device, or a printed circuit board device. In some cases, the database 110 can correspond to a non-transitory computer readable medium. In some cases, the non-transitory computer readable medium can include one or more instructions executable by a system processor 116.

The database 110 can store or maintain one or more data structures, which can include containers, indices, or otherwise store each of the values, pluralities, sets, variables, vectors, numbers, or thresholds described herein. The database 110 can be accessed using one or more memory addresses, index values, or identifiers of any item, structure, or region maintained in the database 110. The database 110 can be accessed by the components of the data processing system 102, the client system 102, the machine learning system 106, or any other computing device described herein, via the network 108. The database 110 can be internal to the data processing system 102. The database 110 can exist external to the data processing system 102 and can be accessed via the network 108. For example, the database 110 can be distributed across many different computer systems (e.g., a cloud computing system) or storage elements and can be accessed via the network 108 or a suitable computer bus interface.

The database 110 can store or maintain filter values 112 associated with entities 114, where each filter value 112 corresponds to a specific value within a filter category or column used in database queries. For example, in the phrase "marketing department," the term "marketing" specifies the filter value, and the term "department" specifies the filter category. The filter values 112 can be used in various query structures, such as qualifier filters (e.g., female or male employees), category-value pair filters (e.g., marketing department), and value-only filters (e.g., part-time workers). Entities 114 can refer to segments of a user query that map to such filter values 112 in the database 110. An entity recognition (ER) model 138 executed by the machine learning system 106 can identify entities (also referred to as filter terms) and associated actions from natural language queries. For example, in the query "how many female employees do we have in the marketing department excluding part-time workers?," the ER model 138 can identify "female employees" as a qualifier filter, "marketing department" as a category-value pair filter, and "part-time workers" as a value-only filter. In another example, the ER model 138 can extract both "full-time associates" and "part-time associates" from the query "show my turnover rate for full-time and part-time associates." During the indexing pipeline, the data processing system 102 can generate a field named searchable_text that concatenates the filter category and filter value into a single string to facilitate hybrid search. For example, if the filter category is "Gender (Self-ID)" and the filter value is "Woman / Female," the searchable_text field becomes "Gender (Self-ID) Woman / Female." The searchable_text field can be stored in association with the corresponding filter value 112 and can be used as an input to lexical retrieval or semantic retrieval operations during execution of the hybrid search.

The data processing system 102 can include, interface with, communicate with, or otherwise utilize a system processor 116. The system processor 116 can execute one or more instructions associated with the data processing system 102. The system processor 116 can include an electronic processor, an integrated circuit, or the like, including one or more of digital logic, analog logic, digital sensors, analog sensors, communication buses, volatile memory, nonvolatile memory, and the like. The system processor 116 can include, but is not limited to, at least one central processing unit (CPU), graphics processing unit (GPU), physics processing unit (PPU), tensor processing unit (TPU), embedded controller (EC), or the like. The system processor 116 can include a memory operable to store or storing one or more instructions for operating components of the system processor 116 and operating components operably coupled to the system processor 116. For example, the one or more instructions can include one or more of firmware, software, hardware, operating systems, or embedded operating systems. The system processor 116 or the data processing system 102 can include one or more communication bus controllers to effect communication between the system processor 116 and the other elements of the data processing system 102.

The data processing system 105 can include, interface with, communicate with, or otherwise utilize a query receiver 118. The query receiver 118 can be or include any script, file, program, application, set of instructions, or computer-executable code that can receive and preprocess input data from the client device 104. The input data can be in the form of a message, query, or prompt. The query can include any user-provided command, request, or natural language text. The query can refer to any input provided in a natural language format, including a message, prompt, request, command, utterance, or other natural language input received from the client device 104 for processing by the data processing system 102. The query can correspond to a request to execute a query operation on a database 110. The query receiver 118 can include hardware, software, or any combination thereof. The query receiver 118 can receive textual inputs from the client system 104 in natural language (e.g., a text string), for example, through user interactions with an application interface 135, for example. User interactions can include clicking buttons, entering text, or using voice commands within the application interface 135. The query receiver 118 can expose an API endpoint, allowing other applications or systems to send prompts in structured formats such as JSON, including for applications such as human capital management (HCM) operations.

The query receiver 118 can convert the received input data, whether unstructured (e.g., natural language text) or structured (e.g., JSON/XML), into an intermediate representation or standardized format for processing by a machine learning model 138. For example, the query receiver 118 can normalize character encoding, remove unsupported formatting, separate a query string from associated metadata, and map fields from a received payload into predefined schema fields. The query receiver 118 can generate a machine-readable request object that identifies at least the natural language query, a corresponding metric, and one or more session, client, or domain attributes used in downstream processing. In cases where the input is received as voice data, the query receiver 118 can further cause the voice data to be converted into text prior to generating the intermediate representation.

In response to receiving a query from the client device 104, the query receiver 118, via the data processing system 102, can cause the machine learning system 106 to execute the machine learning model 138. The machine learning model 138 can be implemented as an entity recognition (ER) model (can also be referred to herein as an ER model 138) configured to parse queries received from the query receiver 118 and identify entities 114 that are mapped to filter values 112 established for the entities 114 in the database 110. The data processing system 102 can identify one or more entities that map to one or more filter values stored in the database 110 by extraction of one or more entities from the query using a parse operation. The parse operation can include evaluating the query to detect one or more words, phrases, tokens, segments, or other portions of the query that correspond to candidate entities. The parse operation can further include separating the query into constituent portions and determining whether a given portion of the query corresponds to a filter-related term, a category-value expression, a qualifier, or another entity associated with a filter value stored in the database 110. The parse operation can be performed using a machine learning model, rule-based logic, pattern matching, schema-guided extraction, or a combination thereof.

The ER model 138 can identify entities (e.g., filter terms) and actions expressed in natural language queries. The entities 114 can include parts of the query that reference filters. For example, in the query "How many female employees do we have in marketing department excluding part-time workers?," the term "female employees" can function as a qualifier filter associated with the metric (e.g., headcount). The term "marketing department" can be classified as a category-value pair filter, where "department" is the category or column, and "marketing" is the value. The term "part-time workers" can function as a value-only filter.

The query receiver 118 can populate a prompt template with at least the natural language query, optional metric information, and formatting instructions, and can transmit the populated prompt to the machine learning system 106. The ER model 138 can process tokenized text of the query in view of the prompt instructions to identify spans of text corresponding to candidate entities, determine whether each candidate entity expresses an inclusion action or an exclusion action, and associate each identified span with a structured label for downstream retrieval.

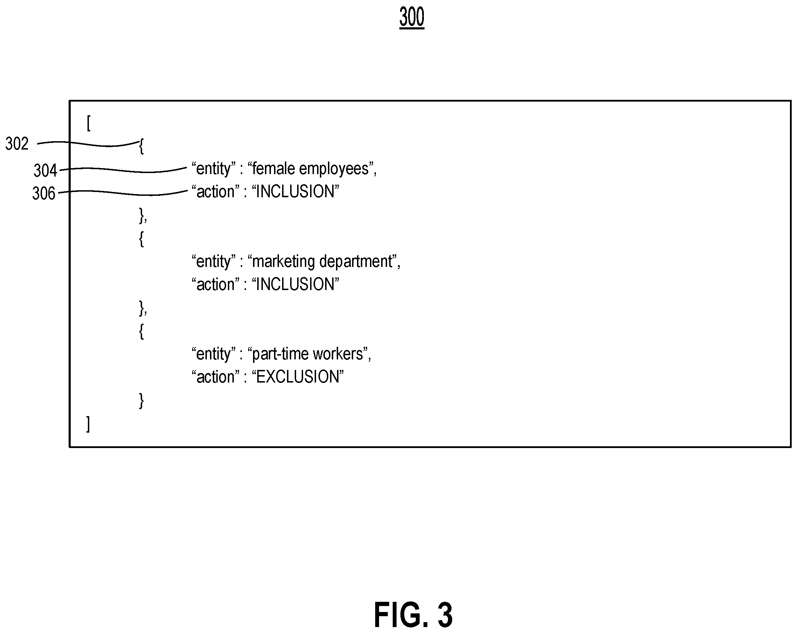

The ER model 138 can execute coreference resolution to extract multiple related entities from a single query. For example, in the query "Show my turnover rate for full-time and part-time associates," the ER model 138 can identify both "full-time associates" and "part-time associates" as distinct entities. The ER model 138 can output a structured list of identified entities and associated actions for downstream processing, as illustrated in FIG. 3. For example, FIG. 3 shows a structured output 300 in which an entity-action object 302 includes an entity field 304 identifying the entity "female employees" and an action field 306 identifying the associated action of "INCLUSION." Additional entity-action objects 302 in the structured output 300 indicate that the entity "marketing department" is associated with an action of "INCLUSION," and that the entity "part-time workers" is associated with an action of "EXCLUSION."

The data processing system 102, via the query receiver 118, can dynamically generate a prompt for the ER model 138, with the prompt including a detailed task description directed to a human resources (HR) domain, a JSON schema to validate the output format, and a set of few-shot examples to improve the ER model's accuracy and understanding of domain-specific queries. The data processing system 102 can transmit the prompt to the ER model 138, via the machine learning system 106, to cause the ER model 138 to process the query and return a structured JSON output that includes the identified entities and actions to the data processing system 102. The ER model 138 can be implemented using a large language model hosted through a cloud-based inference service, while in other implementations a different large language model or inference service can be used while maintaining the same prompt-based extraction and schemavalidated output workflow. The JSON schema can constrain the ER model 138 to return defined fields corresponding to entity text and action type, and the data processing system 102 can validate the returned structured JSON output against the JSON schema before passing or providing the identified entities and actions to downstream search components. In certain cases, suppose that the returned output does not satisfy the JSON schema or omits a required field. In such cases, the query receiver 118 can cause regeneration of the prompt or resubmission of the query to the machine learning system 106 or the ER model 138 to receive or obtain a corrected structured output. In certain cases, the data processing system 102 can generate, by the machine learning model 138, a second model output satisfying the schema by resubmitting the query to the machine learning model 138 in response to the model output not satisfying the schema.

The data processing system 102 can include, interface with, communicate with, or otherwise utilize a filter value identifier 120. The filter value identifier 120 can be or include any script, file, program, application, set of instructions, or computer-executable code that can execute a keyword-based search to identify a set of filter values 112 respectively associated with one or more entities 114 extracted from a user query by the ER model 138. The keyword-based search can be implemented using a lexical search algorithm (e.g., BM25 algorithm), which performs a lexical search by ranking candidate filter values 112 based on the frequency and distribution of the identified entities 114 (or terms within them) appearing in the candidate filter values. The filter value identifier 120 can identify candidate filter values from the database 110 by matching the lexical content of the identified entities 114 to database records or metadata associated with filter value columns or attributes. For example, the filter value identifier 120 can generate a keyword query from text spans corresponding to the identified entities 114 and submit the keyword query against indexed filter records that include category names, filter values, or associated metadata. The filter value identifier 120 can receive a candidate set of filter values 112 ranked according to lexical relevance scores generated by the lexical search algorithm. The filter value identifier 120 can generate a respective keyword query for each entity 114 and can maintain an association between each retrieved candidate filter value 112 and the entity 114 used to generate the respective keyword query.

The filter value identifier 120 can update one or more search index structures, stored filter value representations, or retrieval configuration settings used to identify the candidate filter values 112, including modification of indexed fields, concatenated searchable representations, metadata organization, query parameters, candidate set limits, or ranking configuration. The filter value identifier 120 can perform such updates to improve search performance, retrieval accuracy, storage efficiency, or database optimization while maintaining the workflow in which entities 114 are extracted, candidate filter values 112 are retrieved, candidate filter values 112 are evaluated, and a query is generated for execution on the database 110. For example, the filter value identifier 120 can rebuild or refresh an index to add or remove indexed fields, modify how filter category names and filter value names are concatenated into searchable representations, adjust field-level weighting in keyword retrieval, revise candidate set size limits returned for each entity 114, or reorganize stored metadata used during retrieval, while maintaining the same sequence of entity extraction, candidate retrieval, candidate evaluation, and query generation.

The data processing system 102 can execute a hybrid search to determine respective relevance scores for candidate filter values 112 identified in the database 110. The data processing system 102 can identify the one or more filter values by conducting the hybrid search on the database 110. Conducting a hybrid search can include causing, initiating, coordinating, performing, or otherwise carrying out a search, whether by the data processing system 102, one or more external systems, or a combination thereof. The hybrid search can combine a keyword-based search, implemented with the BM25 ranking function to perform lexical matching on the identified entities (or terms within them), and a semantic search that leverages vector embedding to capture contextual similarity between the identified entities and the meaning of the candidate filter values. The data processing system 102 can identify the one or more filter values by conducting the hybrid search using machine learning-based retrieval, non-machine-learning-based retrieval, or a combination thereof. For semantic search, the data processing system 102 can cause the machine learning system 106 to execute a machine learning model 138 (can also be referred to herein as a relevance scoring model 138). The machine learning model 138 used for semantic search can be an embedding generation or retrieval model 138 that can be separate from a downstream relevance classification model 138 or ranking model 138 used to classify contextual relevance of candidate filters with respect to the user query. The relevance scoring model 138 can generate a vector representation of the identified entities and compare them with stored vector embeddings of the candidate filter values 112 to compute a semantic similarity score for each candidate filter value 112. For example, the data processing system 102 can provide a text representation of each identified entity 114 to the relevance scoring model 138 to generate an entity embedding, retrieve stored embeddings corresponding to candidate filter values 112 from a search index, and compute similarity values between the entity embedding and the stored embeddings to determine the semantic similarity score for each candidate filter value 112.

As the keyword and semantic searches generate relevance scores on different scales, the data processing system 102 or the relevance scoring model 138, depending on the implementation, can normalize such scores to a common range using a min-max scaling technique, then combine them with a weighted arithmetic mean that assigns a weight of 0.92 to the keyword score and 0.08 to the semantic score, for example, to generate a relevance score for each candidate filter value 112. Such weighting can address lexical matches while incorporating contextual understanding from the semantic search. In some cases, the weights applied to the keyword and semantic scores may not be fixed and can be dynamically adjusted. Factors influencing such adjustments can include the presence of exact lexical matches, the complexity of the identified semantic relationships, the user's historical interaction patterns, or confidence levels associated with each search result. The data processing system 102 can perform the normalization across candidate filter values 112 retrieved for the same entity 114 such that the normalized keyword score and the normalized semantic score are comparable before weighted aggregation. The data processing system 102 can normalize, prior to determining the respective relevance score for each filter value of the set of filter values, a first score obtained from the keyword-based search and a second score obtained from the semantic-based search. The data processing system 102 can combine the normalized first score and the normalized second score to determine the respective relevance score for the corresponding filter value 112.

Relevance scoring and relevance ranking can be related but distinct operations performed at different stages of the processing sequence. For example, execution of hybrid search can produce, for each candidate filter value, one or more intermediate relevance scores derived from keyword-based retrieval and semantic-based retrieval. The intermediate relevance score can be normalized and combined to form a relevance score representing a degree of correspondence between the candidate filter value and the natural language query. The relevance score can be numeric, ordinal, bounded, or any other value indicative of a degree of correspondence, similarity, or relevance between the candidate filter value and the natural language query. For example, the relevance score can be represented as a normalized value between 0 and 1, a percentage score, a rank value, or a categorical value indicating high relevance, medium relevance, or low relevance. In certain cases, the relevance score can be computed prior to, and used by, the ranking or classification operations. Subsequent ranking or classification operations operate on the candidate filter values using the relevance scores, along with the query context and associated entity information, to assign each candidate filter value to a relevance category or rank. Such ranking operations can be implemented using rule-based logic, threshold-based evaluation, machine learning-based classification, or combinations thereof. The data processing system 102 can rank each filter value of the set of filter values based on the query and the respective relevance score using machine learning-based ranking, non-machine-learning-based ranking, or a combination thereof. The data processing system 102 can rank filter values by ordering or categorizing filter values based at least in part on the determined relevance scores.

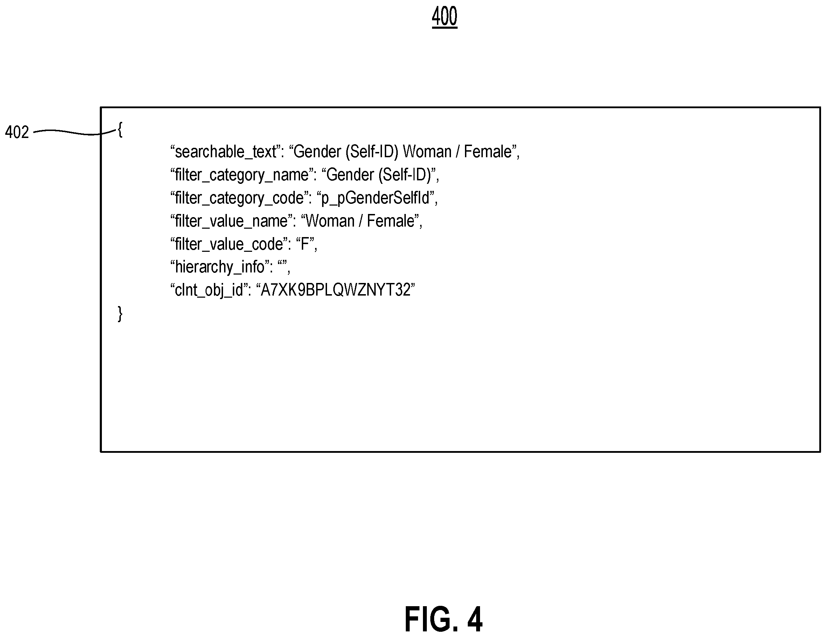

The hybrid search workflow can be supported by a managed vector-based search and retrieval service that can operate in two stages, for example, an indexing pipeline and a runtime search stage. In certain cases, the managed vector-based search and retrieval service can include a search platform supporting lexical retrieval and vector-based retrieval. In the indexing pipeline, the data processing system 102 can generate a searchable_text field by concatenating each filter category and filter value into a single string. For example, if the filter category is "Gender (Self-ID)" and the filter value is "Woman / Female," the resulting searchable_text field becomes "Gender (Self-ID) Woman / Female." The data processing system 102 can generate an embedding for the searchable_text field using the "all-MiniLM-L6-v2" embedding model and store the embedding, along with associated metadata, in the search index. In certain cases, a different embedding model 138 can be used while maintaining the same concatenated searchable_text representation and indexed metadata structure. The indexing pipeline can iterate through a plurality of filter records maintained in the database 110, generate a corresponding searchable_text representation for each filter record, and generate a vector embedding from the searchable_text representation. The indexing pipeline can write the searchable_text representation, the vector embedding, and the associated metadata into the search index for subsequent retrieval during runtime. For example, as illustrated in FIG. 4, an indexed filter object 400 can include a filter object 402 having fields, such as "searchable_text": "Gender (Self-ID) Woman / Female", "filter_category_name": "Gender (Self-ID)", "filter_category_code": "p_pGenderSelfID", "filter_value_name": "Woman / Female", "filter_value_code": "F", "hierarchy_info": "", "clnt_obj_id": "A7XK9BPLQWZNYT32".

The data processing system 102 can cause the machine learning system 106 to execute a selected embedding model 138 from among a plurality of embedding models 138 to generate the vector representation of the identified entities and the stored vector embeddings of the candidate filter values 112. The data processing system 102 can maintain, via the indexing pipeline, embeddings generated using the selected embedding model 138. The data processing system 102 can update the search index by regenerating the stored vector embeddings using a different embedding model while maintaining the keyword-based search, semantic-based search, score normalization, weighted score aggregation, and ranked filtering operations of the hybrid search framework. The data processing system 102 can interchange embedding models 138 over time to improve retrieval accuracy, reduce latency, reduce computational cost, or satisfy deployment specific optimization requirements without modifying the overall query processing workflow. For example, the data processing system 102 can select a first embedding model for an initial indexing cycle, store embeddings generated by the first embedding model in the search index, and subsequently initiate a re-indexing operation in which a second embedding model generates replacement embeddings for the same searchable_text representations, such that the runtime retrieval logic continues to execute against updated embeddings without changing the surrounding hybrid search pipeline.

The data processing system 102 can process fully specified user queries (e.g., queries that explicitly mention both category and value) and ambiguous queries where only the filter value is provided and may appear in multiple categories, by combining the category and value into the searchable_text field. During the runtime search stage, the data processing system 102 can perform hybrid search operations for each entity extracted by the ER model 138 using the same "all-MiniLM-L6-v2" model for semantic similarity matching. The runtime search can include executing BM25 lexical queries and nearest-neighbor vector queries against the indexed embeddings. The relevance scoring model 138 can normalize and combine the BM25 scores and the semantic similarity scores to generate a final relevance score for each candidate filter value 112. The candidate filter values 112 can then be retrieved based on combined keyword and semantic similarity scores, such that the filter suggestions presented for query generation are contextually appropriate. For example, for each extracted entity 114, the data processing system 102 can execute a lexical query against the searchable_text field, execute a vector similarity query using an embedding generated from the extracted entity 114, merge the returned candidate sets, and associate each candidate filter value 112 with a combined relevance score for subsequent evaluation.

In certain cases, during computation of a weighted combination of the keyword-based search and the semantic-based search within the hybrid search, the relevance scoring model 138 can assign a higher weight to the relevance score derived from the keyword-based search based on the query exhibiting lexical identity with the filter value 112. In some cases, the relevance scoring model 138 can assign a higher weight to the relevance score derived from the semantic-based search based on the query including semantic equivalents relevant to the filter value. For example, suppose an extracted entity 114 exactly matches or substantially matches text of a filter value 112 or the searchable_text field. In such cases, the relevance scoring model 138 can increase the contribution of the keyword-based score in the weighted combination. In certain cases, suppose the extracted entity 114 includes paraphrased terminology, synonymous wording, or domain-specific language that is semantically related to, but not lexically identical with, the filter value 112. In such cases, the relevance scoring model 138 can increase the contribution of the semantic-based score in the weighted combination.

The data processing system 102 can include, interface with, communicate with, or otherwise utilize a filter evaluator 122. The filter evaluator 122 can be or include any script, file, program, application, set of instructions, or computer-executable code that can evaluate and refine candidate filter values 112 retrieved from the database 110 in response to executing the hybrid search. The filter evaluator 122 can reduce noise by removing duplicate filter values 112 across entities 114, sorting filter values 112 based on their computed relevance scores, and discarding filter values 112 that fall below predefined thresholds. The filter evaluator 122 can incorporate user-confirmed filters and leverage historical feedback to improve future predictions. The filter evaluator 122 can facilitate bypassing redundant disambiguation steps, streamlining the filter selection process, and improving system responsiveness. The filter evaluator 122 can apply multiple scoring thresholds during evaluation, including a minimum score threshold to exclude low-relevance filters, a distance-from-top-score cutoff to discard filters that deviate from the highest-ranked candidate, and a score drift cutoff to remove filters with steep relative declines in relevance compared to their predecessors. The filter evaluator 122 can validate each candidate filter value 112 against a predefined list of supported filter categories to support consistency with domain-specific constraints. The filter evaluator 122 can enhance the accuracy and contextual relevance of the selected filter set while balancing relevance with latency. For example, by removing duplicates, applying threshold based pruning, and validating candidate filters against supported categories before downstream contextual classification, the filter evaluator 122 can reduce the number of candidate filters (e.g., by at least 10%, 25%, or 50% relative to a pre-pruned candidate set) provided to a relevance classification model 138.

The filter evaluator 122 can group candidate filter values 112 by corresponding entity 114, compare filter identifiers across grouped results to remove duplicate candidate filter values 112, and sort or arrange the remaining candidate filter values 112 according to combined relevance scores. The filter evaluator 122 can sequentially apply the minimum score threshold, the distance-from-top-score cutoff, and the score drift cutoff to prune lower quality candidates before passing or providing a reduced candidate set to a downstream ranking component. The filter evaluator 122 can compare candidate filter categories against a stored allowlist of supported categories and can mark previously user-confirmed filter values 112 such that the previously user-confirmed filter values 112 are retained or prioritized during subsequent evaluations. The previously user confirmed filter values 112 can be associated with a user profile, a client tenant, a session history, a domain context, or another historical interaction context. The filter evaluator 122 can use such prior confirmation information to bypass redundant disambiguation, automatically retain a candidate filter value 112 that matches a previously confirmed selection, or prioritize the candidate filter value 112 during subsequent ranking or clarification workflows.

The filter evaluator 122 can perform duplicate removal before the candidate filter values 112 are ranked by a ranking model 138 by identifying a first candidate filter value and a second candidate filter value that correspond to a same underlying filter value, a same filter value code, or a same normalized filter value name. The filter evaluator 122 can remove one of the first candidate filter value or the second candidate filter value from the set of candidate filter values before providing the reduced candidate set to the ranking model 138. Suppose that the first candidate filter value and the second candidate filter value have the same value but are retrieved through different entities 114, query paths, or candidate lists. In such cases, the filter evaluator 122 can retain the higher-scoring instance and discard the lower-scoring instance prior to ranking. Removing one of the first candidate filter value or the second candidate filter value can reduce a number of candidate filter values processed during generation or execution of the second query, for instance.

The data processing system 105 can cause the machine learning system 106 to execute a machine learning model 138 (can also be referred to herein as a ranking model 138) that can rank each candidate filter value 112 based on the input query and the relevance scores determined during the hybrid search process. The ranking model 138 can assign each filter value to one of three ranks or categories based on its contextual relevance to the user query. The ranking model 138 can select, for inclusion in a first rank (e.g., for candidate filter values 112 having respective relevance scores greater than or equal to 0.80), one or more filter values 112 having respective relevance scores that exceed a first threshold indicative of the highest relevance to the query. Such filter values can be classified as highly relevant (e.g., very relevant) and can be applied automatically without user confirmation for further processing. The ranking model 138 can select, for inclusion in a second rank (e.g., for candidate filter values 112 having respective relevance scores greater than or equal to 0.50 and less than 0.80), one or more filter values 112 having respective relevance scores that are between the first threshold and a second threshold, where the second threshold is lower than the first threshold. Such filter values 112 can be classified as contextually relevant (e.g., relevant) but may require user clarification for further processing, particularly when multiple filter values are associated with the same entity 114.

The ranking model 138 can also select, for inclusion in a third rank (e.g., for candidate filter values 112 having respective relevance scores less than 0.50), one or more filter values 112 having respective relevance scores that fall below the second threshold. Such filter values can be classified as having low contextual relevance (e.g., irrelevant) and can be excluded from further processing. For example, the data processing system 102 can provide the ranking model 138 with the input query along with the reduced candidate set generated or provided by the filter evaluator 122, and the ranking model 138 can evaluate each candidate filter value 112 in view of the query context, the corresponding entity 114, and the relevance score associated with the candidate filter value 112 to assign the candidate filter value 112 to one of the first rank, the second rank, or the third rank. In certain cases, the relevance scores used for assigning candidate filter values 112 to the first rank, the second rank, or the third rank can be distinct from one or more threshold values applied during post-processing prior to relevance ranking, for instance.

The ranking model 138 can be implemented using a cloud-based large language model service and can operate based on a prompt defining a classification task that evaluates the contextual relevance of candidate filter values 112 to a user query. The prompt, provided by the data processing system 102, can include the user query, a set of candidate filter values 112, a JavaScript Object Notation (JSON) schema that specifies the expected output format, and a set of few-shot examples to guide the ranking model 138 in performing domain-specific classification. The ranking model 138 can return a structured output in the form of a JSON object, with each entry including a filter identifier and the corresponding relevance classification. The list of predicted filter values 112 can include those classified as highly relevant, relevant, or irrelevant. For example, the data processing system 102 can populate the prompt with the natural language query, candidate filter identifiers, category names, filter value names, and associated relevance information, transmit the populated prompt to the cloud-based LLM service, and validate the returned JSON object against the JSON schema before using the relevance classifications in subsequent query generation or user clarification workflows.

Filter values classified as very relevant can be automatically selected and included in the query generation process. In certain cases, suppose the output includes one or more filter values 112 classified as relevant but not automatically selectable due to being flagged by the ranking model 138. In such cases, the data processing system 105 can request user input through the client device 104 to confirm or clarify such filter values 112 before query execution. In certain cases, the presence of at least one such filter value 112 classified as relevant can trigger a clarification workflow prior to execution of the database query, unless the data processing system 102 determines from prior validation data, confirmation history, or another confidence rule that such clarification can be omitted. The data processing system 105 can provide, to the client device 104 for display, a content item identifying the filter values 112 included in the second rank. The ranking model 138 can generate or format the content item based on the relevance classifications assigned to the candidate filter values 112. The content item can include, for each of the filter values 112, a corresponding filter identifier and an indication that the filter value 112 has been assigned to the second rank. The content item can be presented to the client device 104 in at least one of a textual list or an interactive user interface element to facilitate user review or interaction. If the set of filter values 112 includes only highly relevant filters, the data processing system 102 can proceed with query generation without requiring user interaction. For example, the data processing system 102 can provide filter values 112 classified as very relevant to a query generation component, while generating a selectable clarification interface for filter values 112 classified as relevant, such as a list of candidate filters with corresponding identifiers and selectable controls. Upon receiving user input identifying one or more confirmed filter values 112 from the clarification interface, the data processing system 102 can add the confirmed filter values 112 to the set of selected filter values 112 used to generate a database query. In certain cases where one or more filter values 112 remain classified as relevant after post-processing or contextual ranking, the data processing system 102 can delay execution of the database query pending completion of the clarification workflow or authorization of selection according to a stored confirmation rule.

The data processing system 102 can include, interface with, communicate with, or otherwise utilize a query generator 124. The query generator 124 can be or include any script, file, program, application, set of instructions, or computer-executable code that can generate a customized or second query for execution on the database 110 based on the ranking of filter values 112 or based on the ranking of at least one filter value 112. The at least one filter value 112 can include one or more filter values 112 selected based on the ranking, including one or more filter values 112 included in the first rank or one or more filter values 112 validated by a user via the client device 104. The data processing system 102 can generate the second query using machine learning-based processing, non-machine-learning-based processing, or a combination thereof. The query generator 124 can generate the customized query using filter values 112 included in the first rank, which have been classified by the ranking model 138 as highly relevant to the input query. In cases where filter values 112 are classified as relevant and presented to the user through a content item, the query generator 124 can generate the customized query upon receiving user input indicating confirmation or inclusion of such filter values 112. The query generator 124 can construct the query dynamically using a combination of automatically selected or user-confirmed filter values to align the query generation with the user intent. The second query based on the rank can reduce a number of candidate filter values processed during execution of the second query compared to the query received in the natural language format from the client device 104.

The query generator 124 can map each selected filter value 112 to a corresponding database field identifier, filter category code, or filter value code stored in association with the filter value 112, and can assemble a structured query representation that includes one or more filter conditions corresponding to the selected filter values 112. The database field identifier can identify a field of the database 110 to which the selected filter value 112 corresponds. The filter category code can identify a category of filtering associated with the selected filter value 112. The filter value code can identify a coded representation of the selected filter value 112 for use in query construction or execution. The query generator 124 can combine the structured query representation with a metric identifier, aggregation instruction, date range, grouping parameter, or other query parameter derived from the user query or associated request metadata to generate the customized query for execution on the database 110. The query generator 124 can construct the customized query by iterating through the selected filter values 112, determining for each selected filter value 112 whether the associated action corresponds to inclusion or exclusion, and generating a corresponding clause in the customized query that either applies or omits records matching the selected filter value 112. The query generator 124 can combine the corresponding clauses using one or more Boolean operators according to relationships among the selected filter values 112, including combining filter values 112 associated with different entities 114 as conjunctive conditions and combining alternative filter values 112 associated with the same entity 114 as disjunctive conditions.

The query generator 124 can further merge filter values 112 automatically selected from the first rank with user confirmed or validated filter values 112 received in response to the content item to form a filter set used to generate the customized query. The query generator 124 can generate the customized query in a machine-readable query format, application-specific query object format, or database query language format for submission to the database 110 or to an intermediate execution service. In certain cases, suppose that the associated action for a mapped filter value 112 indicates inclusion. In such cases, the query generator 124 can generate a query condition that includes records matching the mapped filter value 112. In certain cases, suppose that the associated action for a mapped filter value 112 indicates exclusion. In such cases, the query generator 124 can generate a query condition that excludes records matching the mapped filter value 112, including by generating a negated filter clause, an exclusion operator, or a condition configured to omit records associated with the mapped filter value 112 from query results. In certain cases, the query can be generated such that the corresponding query can include one or more query conditions excluding the mapped filter value according to the associated action.

The data processing system 102 can include, interface with, communicate with, or otherwise utilize an output formatter 126. The output formatter 126 can be or include any script, file, program, application, set of instructions, or computer-executable code that can generate and provide output to the client device 104. The output formatter 126 can format the output to be compatible with the display or rendering requirements of the client device 104. The output formatter 126 can provide, to the client device 104, an output including data retrieved from the database 110 upon execution of the customized or second query. In some cases, the output formatter 126 can provide, to the client device 104 for display, a content item identifying one or more filter values 112 included in the second rank. The content item can support user review and confirmation workflows and can be formatted to align with the presentation structure required by the application interface 135 executed on the client device 104.

The output formatter 126 can receive query results from the database 110 or from an intermediate execution service, parse the returned result set, and transform the result set into a presentation format compatible with the application interface 135. The output formatter 126 can map returned fields to display labels, organize returned values into one or more tables, charts, cards, or text summaries, and include metadata identifying the metric, date range, grouping, or applied filter values 112 associated with the query results. In cases where one or more filter values 112 are included in the second rank, the output formatter 126 can generate the content item by assembling a list of the second rank filter values 112 along with corresponding filter identifiers, filter category names, and indications of relevance classification. The output formatter 126 can encode the content item in a format consumable by the client device 104, such as a structured response object, and can associate each listed filter value 112 with a selectable control to receive user confirmation, rejection, or modification of the listed filter value 112 through the application interface 135. The structured response object can further associate each listed filter value 112 with a persistent identifier, callback parameter, or event token such that user interaction with the selectable control causes a response identifying the corresponding filter value 112 and the selected action to be transmitted back to the data processing system 102 for query regeneration, refinement, or execution.

The output formatter 126 can determine a target rendering format based on one or more characteristics of the client device 104, including device type, screen size, supported interface components, or session context, and can modify the output before transmission. For example, the output formatter 126 can generate a first layout for a mobile client device and a second layout for a desktop client device, truncate or expand displayed data fields based on available display area, and sequence clarification prompts and result data such that user-selectable filter confirmation controls are presented before, after, or together with database query results. The output formatter 126 can further generate one or more interface elements identifying applied filter values 112, excluded filter values 112, or pending clarification items such that a user can view how the customized query is generated and, in certain cases, update one or more query inputs through the application interface 135.

The data processing system 102 can include, interface with, communicate with, or otherwise utilize a model manager 128. The model manager 128 can train, fine-tune, update, retrain, or otherwise maintain one or more machine learning models 138. The model manager 128 can include hardware, software, or any combination thereof. The model manager 128 can reside within the data processing system 102, where the model manager 128 can manage and coordinate the training, fine-tuning, and updating of the machine learning models 138. In some cases, the model manager 128 can exist outside the data processing system 102, operating as a remote service that interacts with the data processing system 102 via application programming interfaces (APIs). The model manager 128 can facilitate the training of machine learning models 138 on training datasets 134 and can fine-tune the machine learning models 138 for specific tasks or domains. For example, the model manager 128 can receive training data, evaluation data, and model configuration inputs, initiate model training or evaluation jobs using the machine learning system 106, store resulting model versions or parameter settings, and cause a selected model version or configuration to be deployed for runtime use by one or more components of the data processing system 102.

The model manager 128 can select, configure, or update an embedding model 138 from among a plurality of embedding models 138 used by the machine learning system 106 to generate vector representations of identified entities and stored vector embeddings of candidate filter values 112 for semantic search operations. The model manager 128 can cause the data processing system 102 to maintain, via the indexing pipeline, embeddings generated using a selected embedding model 138 and can further cause the data processing system 102 to regenerate and replace stored vector embeddings in the search index using a different embedding model while maintaining the keyword-based search, semantic-based search, score normalization, weighted score aggregation, and ranked filtering operations of the hybrid search framework. The model manager 128 can support interchange of embedding models over time to improve retrieval accuracy, reduce latency, reduce computational cost, or satisfy deployment-specific optimization requirements without modifying the overall query processing workflow.

The model manager 128 can support an error analysis workflow in which outputs generated by one or more machine learning models 138 can be reviewed to identify error patterns, failure cases, or sources of ambiguity in entity recognition, candidate filter retrieval, post-processing, or relevance ranking. Based on the identified error patterns, the model manager 128 can cause one or more model inputs or operating parameters to be adjusted, including modification of prompts, few-shot examples, schema constraints, threshold values, ranking logic, score aggregation settings, or keyword-based and semantic search parameters, to improve subsequent query processing performance. In certain cases, the adjusted inputs or operating parameters can include acronym or abbreviation expansion resources used to expand shorthand query terms before or during entity recognition and retrieval. For example, the data processing system 102 can identify an acronym in a received query, determine one or more expanded forms using a domain-specific lexicon, prior confirmed query interactions, or a machine learning model, and provide the acronym and the one or more expanded forms to the entity recognition model 138, the hybrid search, or both.

The model manager 128 can evaluate the performance of the machine learning model 138 using several standard metrics, such as precision, recall, F1 score, and F2 score, among others. For example, the model manager 128 can compare predicted filter values 112 generated by the machine learning model 138 for a given sample against labeled reference filter values 112 in the dataset to determine counts of true positives, false positives, and false negatives used in computing the evaluation metrics. Precision can be computed as the ratio of true positives to the sum of true positives and false positives. Precision can correspond to the proportion of correctly identified filters among all suggested filters. Recall can be computed as the ratio of true positives to the sum of true positives and false negatives. Recall can correspond to the proportion of correctly identified filters out of all relevant filters in the dataset. F1 score can be the harmonic mean of Precision and Recall. F1 score can be computed as 2 x (Precision x Recall) / (Precision + Recall), providing a balanced metric for overall performance of the machine learning model 138. F2 score can be a weighted harmonic mean that emphasizes Recall over Precision. F2 score can be computed as 5 x (Precision x Recall) / (4 x Precision + Recall) and can be beneficial in instances where capturing all relevant filters is important.

The model manager 128 can compute such metrics under a relaxed variant and a strict variant. In the relaxed variant, the evaluation includes all filter values 112 identified by the machine learning model 138, including preselected filter values 112 classified as very_relevant and filters prompting user confirmation classified as relevant. In the relaxed variant, the model manager 128 can evaluate the machine learning model's ability to identify all potentially relevant filters, regardless of whether user input is needed. In the strict variant, the evaluation includes only preselected filters classified as very_relevant, allowing the model manager 128 to measure the machine learning model's precision in automatically applying filters without user input.

The model manager 128 can manage zero-division cases by assigning a metric value of 1.0 when no true positives exist, based on the determination that no relevant filter values 112 are to be suggested in the absence of relevant data. In such cases, the precision and recall will be 1.0. The model manager 128 can set the averaging configuration or method to "samples." For example, in such cases, the model manager 128 can compute each evaluation metric per sample and average the results across all samples in the dataset. The model manager 128 can facilitate a comprehensive evaluation of the machine learning model's performance in both relaxed and strict evaluation instances for fine-tuning and task-specific optimization.

The model manager 128 can evaluate the performance of the machine learning model 138 across multiple executions to address stochastic variations in output associated with certain model types, including large language models (LLMs). For instance, to address variability in prediction outcomes across runs, the model manager 128 can execute repeated evaluations and compute average values for each performance metric. For example, the model manager 128 can perform independent evaluation runs and compute the mean values of Precision, Recall, F1 score, and F2 score for both relaxed and strict evaluation variants. In one example, under the relaxed evaluation variant, the average scores were approximately 0.959 for Precision, 0.967 for Recall, 0.963 for F1 score, and 0.965 for F2 score. In another example, under the strict evaluation variant, the average scores were approximately 0.974 for Precision, 0.957 for Recall, 0.965 for F1 score, and 0.960 for F2 score. The model manager 128 can support evaluation processes that identify performance trade-offs between comprehensive filter identification and precise preselection. For example, the relaxed evaluation variant can specify the machine learning model's ability to identify a broad set of relevant filter values 112, as indicated by high precision and recall scores. The strict evaluation variant can specify the precision of automatic filter application in the absence of user input, indicating the machine learning model's reliability in preselecting highly relevant filters.

The model manager 128 can improve the predictive performance of the machine learning model 138 in ranking contextually relevant filters while maintaining computational efficiency and scalability. The model manager 128 can enhance the performance of the machine learning model 138 through hyperparameter tuning and threshold calibration. The model manager 128 can implement a Bayesian optimization algorithm to identify a configuration for improving the relaxed F2 score, which emphasizes recall while maintaining a balance with precision. For example, the model manager 128 can iteratively select candidate values for one or more weights, thresholds, or query-size parameters, execute an evaluation workflow using each candidate parameter set, measure a resulting relaxed F2 score for the candidate parameter set, and select a subsequent candidate parameter set based on previously observed evaluation results. The tuning process can include adjusting the weight parameters used in hybrid search score aggregation, such as assigning a weight of 0.92 to keyword-based relevance scores and a weight of 0.08 to semantic-based relevance scores. Such weighting can help balance the precision of lexical matching with the contextual understanding provided by semantic embeddings. In some cases, the model manager 128 can be used to fine-tune post-processing thresholds to refine candidate filter values 112 prior to relevance ranking. The thresholds can include a minimum score threshold (e.g., 0.37), a distance-from-top-score cutoff (e.g., 0.68), and a score drift cutoff (e.g., 0.73). In certain cases, such threshold values can be applied during post-processing to prune or reduce candidate filter values 112 before the ranking model 138 assigns the candidate filter values 112 to the first rank, the second rank, or the third rank based on contextual relevance. In certain cases, one or more of such threshold values can be applied during the ranking performed by the ranking model 138 to support assignment of the candidate filter values 112 to the first rank, the second rank, or the third rank based on contextual relevance. The thresholds can help minimize noise and latency in relevance classification or ranking. The model manager 128 can configure the machine learning model 138 to support a query size of 50 filters per query or more, as needed, to maintain scalability and responsiveness in complex queries.

The data processing system 102 can store or maintain a training dataset 134 used to train one or more machine learning models 138 by the model manager 128. The training dataset 134 can include a curated set of real-world user interaction data. The training dataset 134 can include 360 samples, with approximately 21.11% of the samples (e.g., 76 queries) including at least one categorical filter value 112, and the remaining 78.89% of the samples (e.g., 284 queries) including user queries that do not reference any filter values 112. The training dataset 134 can provide a representative distribution of query types, allowing the machine learning models 138 to be trained and evaluated under operationally realistic conditions. Each sample in the training dataset 134 can include a natural language query and one or more reference labels identifying whether the query includes a categorical filter. For queries that include one or more categorical filters, each sample in the training dataset 134 can further include one or more annotations identifying corresponding entities, filter categories, filter values, inclusion or exclusion actions, or relevance classifications associated with the query. The data processing system 102 or the model manager 128 can generate or refine the annotations through review of historical user interactions, comparison against executed query data, or manual labeling workflows such that the training dataset 134 provides ground-truth outputs for training or evaluating the machine learning models 138.

The model manager 128 can use the training dataset 134 by partitioning the samples into one or more subsets for model development, validation, and evaluation, and by providing selected samples to the respective machine learning models 138 according to the task performed by each model. For example, the model manager 128 can provide query text and corresponding entity-action annotations to an entity recognition model 138, can provide candidate filter values 112 and associated relevance labels to a ranking model 138, and can use held-out samples to evaluate retrieval accuracy, ranking accuracy, or end-to-end filter extraction performance before deployment of an updated model configuration. The data processing system 102 can update the training dataset 134 over time by incorporating newly observed user queries, newly confirmed filter selections, corrected predictions identified during error analysis, or updated domain-specific annotations. The model manager 128 can maintain the training dataset 134 as a versioned dataset in which newly added samples are normalized, labeled, and associated with corresponding client, domain, or schema context prior to use in subsequent model training, fine-tuning, or evaluation workflows.

The data processing system 102 can include, interface with, communicate with, or otherwise utilize an interface controller 130. The interface controller 130 can be or include any script, file, program, application, set of instructions, or computer-executable code that can facilitate communication among the data processing system 102, the client system 104, and the machine learning system 106. The interface controller 130 can include hardware, software, or any combination. The interface controller 130 within the data processing system 102 can be similar to, and include any of the structure and functionality of, the interface controller 136 described in connection with the client system 104, or the interface controller 140 described in connection with the machine learning system 106.

The interface controller 130 can facilitate communication among the data processing system 102, the client system 104, and the machine learning system 106 via one or more communication interfaces. A communication interface can include, for example, an application programming interface ("API") compatible with a particular component of the data processing system 102, the client system 104, or the machine learning system 106. The communication interface can provide a particular communication protocol compatible with a particular component of the data processing system 102, a particular component of the client system 104, or a particular component of the machine learning system 106. The interface controller 130 can be compatible with particular content objects and can be compatible with particular content delivery systems corresponding to particular content objects, structures of data, types of data, or any combination thereof. For example, the interface controller 130 can be compatible with the transmission of structured or unstructured data according to one or more metrics.

The data processing system 102 can include, interface with, communicate with, or otherwise utilize an operation controller 132. The operation controller 132 can be or include any script, file, program, application, set of instructions, or computer-executable code that can manage and execute actions associated with one or more components of the data processing system 102, the client system 104, or the machine learning system 106. The operation controller 132 can define and manage workflows comprised of multiple interconnected tasks. The operation controller 132 can initiate, monitor, and control the execution of workflow steps. The operation controller 132 can implement conditional logic for dynamic workflow routing. The operation controller 132 can execute multiple tasks concurrently through parallel processing. The operation controller 132 can implement error handling and recovery mechanisms for workflow exceptions. The operation controller 132 can track workflow progress and provide status updates. For example, the operation controller 132 can include one or more interfaces to detect input at various portions of a workflow and can provide output responsive to specific portions of a workflow.

The client system 104 can execute an application that communicates with the data processing system 102 and the machine learning system 106. The application can present one or more application interfaces 135. The application interface 135 can include a set of rules or protocols that allow different software programs or systems to communicate with each other. The application interface 135 can provide user interfaces to facilitate interaction. For example, the application interface 135 can support text-based interactions or voice-based interactions. Users can input information, view content, or initiate actions through the application interface 135. The application interface 135 can be associated with a particular client application that communicates with the data processing system 102 and the machine learning system 106 to process user prompts. The client application can include an application executing on each client system 104. The client application can include a web application, a server application, a resource, a desktop, or a file. The client application can include a local application (e.g., local to a client system), a hosted application, a software-as-a-service (SaaS) application, a virtual application, a mobile application, and other forms of content. The client application can include or correspond to applications provided by remote servers or third-party servers.

The client system 104 can include, interface with, communicate with, or otherwise utilize an interface controller 136. The interface controller 136 within the client system 104 can be similar to, and include any of the structure and functionality of, an interface controller 130 described in connection with the data processing system 102, or an interface controller 140 described in connection with the machine learning system 106. For example, the interface controller 136 within the client system 104 can communicate with the data processing system 102 or the machine learning system 106 via the network 108 using one or more communication interfaces to carry out the various operations described herein. The interface controller 136 can be compatible with particular content objects and can be compatible with particular content delivery systems corresponding to particular content objects, structures of data, types of data, or any combination thereof.

The machine learning system 106 can include, interface with, communicate with, or otherwise utilize various machine learning models 138 trained on training datasets 134 or a set of few-shot examples. The machine learning model 138 can be deployed within the data processing system 102 or externally as remote services. The machine learning model 138, residing within the data processing system 102, can be similar to, and include any of the structure and functionality of, the machine learning model 138 residing within the machine learning system 106. The machine learning models 138 can be trained with same or different types of machine learning techniques, trained with the same or different types of training data, or trained or configured to receive different types of input or provide different types of output. Example machine learning techniques can include neural networks, such as a generative adversarial network (e.g., a generator neural network and a discriminator neural network that are trained simultaneously through adversarial training), a variational autoencoder (e.g., an autoencoder neural network that learns to generate new data samples by modeling the underlying probability distribution of the data), an autoregressive model, or other types of neural networks (e.g., deep learning models, convolutional neural networks, recurrent neural networks, or transformers). Transformers can refer to or include a type of deep learning model architecture configured for natural language processing, including, for example, bidirectional encoder representations ("BERT"), generative pre-trained transformers, text-to-text transformer, transformer-XL, robustly optimized BERT, or distilled BERT. Other types of machine learning techniques can include supervised learning models, unsupervised learning models, semi-supervised learning models, or reinforcement learning models. For example, a supervised machine learning technique can include a support vector machine used for classification and regression tasks. Given a set of labeled training data, a support vector machine can identify the hyperplane that separates the data into classes with the largest possible margin (e.g., distance between the hyperplane and nearest data points from each class).

The machine learning model 138, such as the large language model 138, can perform a variety of text processing tasks, including, but not limited to, generating text, formatting instructions, comprehending and processing natural language input, and responding to prompts with contextually relevant information. The large language model 138 can include a transformer architecture, such as a generative pre-trained transformer (GPT) architecture. The transformer architecture can include an encoder that can process the input text and a decoder that can generate the output text. The large language model 138 can include multiple layers that can operate to process and generate text. For example, embedding layers can convert words or tokens into dense vectors of fixed size, attention layers can use mechanisms such as self-attention to weigh the importance of different tokens in a sequence, and feedforward layers can apply transformations to the data to learn complex patterns. The large language model 138 can use a self-attention mechanism to weight different parts of the input sequence when generating predictions. The large language model 138 can determine one or more properties of an input prompt that correspond to natural language. Natural language input can have a syntactic structure in which individual words, collections of words (e.g., phrases), or relative positions of words (e.g., word order) can indicate specific meanings. The large language model 138 can parse sentences into their grammatical components to understand the structure and relationships between words. The large language model 138 can use phrasing structure rules that define how words combine to form phrases and sentences.

The machine learning system 106 can include or correspond to various components configured to perform various stages of natural language query interpretation and filter identification. The machine learning model 138 can include one or more of an entity recognition model 138, an embedding generation or retrieval model 138, a relevance scoring model 138, a ranking model 138, a sequence-to-SQL model 138, a sequence encoder model 138, a value-aware neural architecture, a semantic parsing model 138, or another machine learning model that can support filter identification, semantic retrieval, contextual relevance classification, or query generation. For example, the machine learning model 138 can include a sequence-to-SQL model 138 configured to generate structured database queries by constructing SELECT, WHERE, and GROUP BY clauses from natural language input. The machine learning model 138 can include a sequence encoder model 138 configured to incorporate representations of database cell values referenced in the query into the corresponding positions of the encoded token sequence. The machine learning model 138 can include a value-aware neural architecture, including multiple neural networks trained on a complex, multi-domain dataset. The value-aware neural architecture can enhance query generation by leveraging metadata and underlying database values, and can extract filter values from user input and infer candidates not explicitly stated in the query. The machine learning model 138 can include a semantic parsing model 138 configured to operate over large-scale knowledge bases and can learn mappings from natural language to logical predicates using question-answer pairs. The machine learning model 138 can include an entity recognition (ER) model 138 configured to identify filter terms and actions in user queries. The ER model 138 can perform coreference resolution to extract multiple related entities and can be implemented using a large language model hosted through a cloud-based inference service. The machine learning model 138 can operate with a hybrid search logic that combines keyword-based search using a lexical relevance algorithm and semantic search using vector embeddings to retrieve relevant filter values 112 for the identified entities 114. The machine learning model 138 can include a relevance model 138 that evaluates the contextual relevance of each candidate filter value 112 with respect to the user query. The relevance model 138 can classify or rank filter values into various categories, including very relevant, relevant, and irrelevant, and can be implemented using the large language model hosted through a cloud-based model hosting platform. The machine learning model 138 can incorporate prior user feedback during model execution or post-processing to refine filter predictions and improve the accuracy of future relevance classification or ranking.

The machine learning system 106 can include, interface with, communicate with, or otherwise utilize an interface controller 140. The interface controller 140 within the machine learning system 106 can be similar to, and include any of the structure and functionality of, an interface controller 130 described in connection with the data processing system 102 or an interface controller 136 described in connection with the client system 104. For example, the interface controller 140 within the machine learning system 106 can communicate with the data processing system 102 or the client system 104 via the network 108 using one or more communication interfaces to carry out the various operations described herein. The interface controller 140 can be compatible with particular content objects and can be compatible with particular content delivery systems corresponding to particular content objects, structures of data, types of data, or any combination thereof.

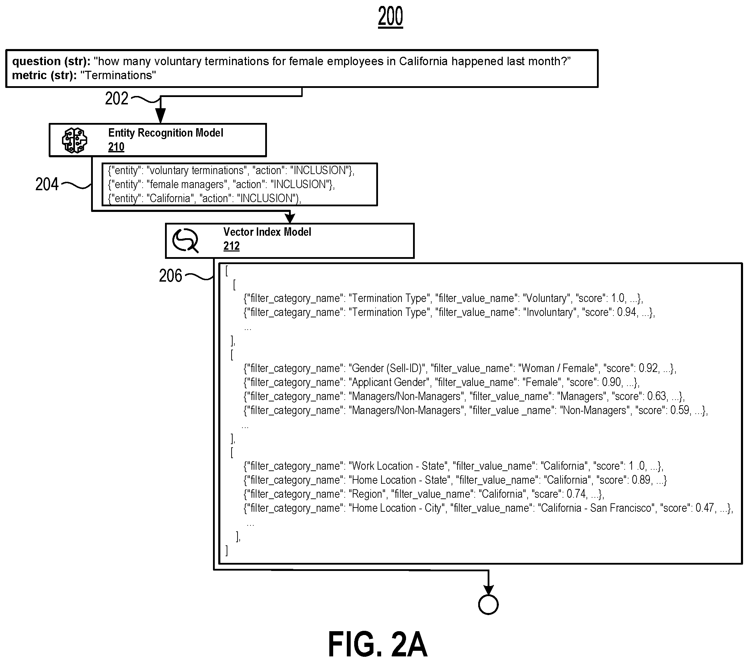

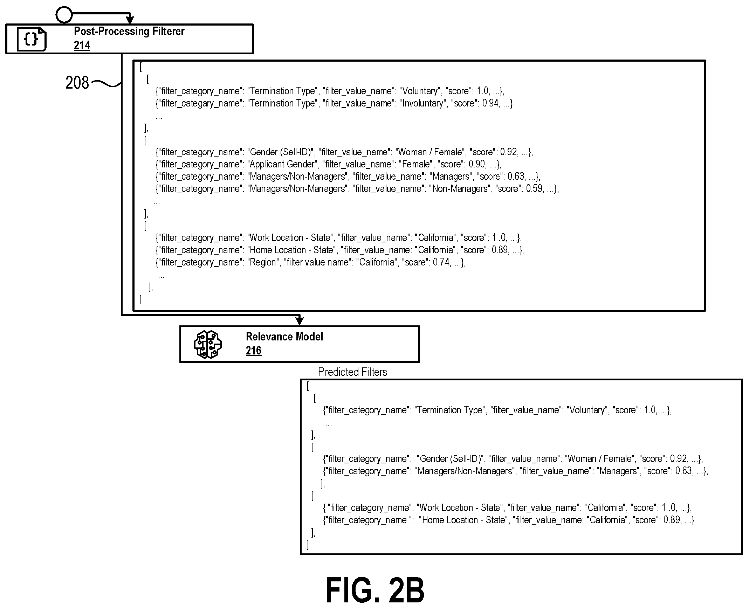

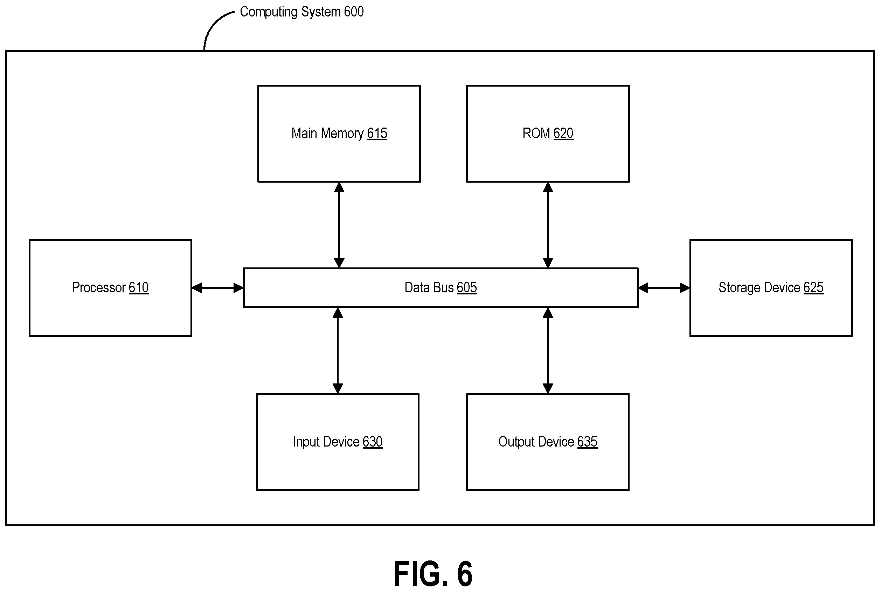

FIGS. 2A-2B depict an example process 200 for processing a natural language query with hybrid search and ranked filtering. Various components associated with FIGS. 2A-2B may be similar to, and include any of the structure and functionality of, the system 100 of FIG. 1. The example process 200 depicted in FIGS. 2A-2B can be performed by one or more systems or components depicted in FIG. 1 or FIG. 6. The process 200 can be performed by a server executing machine-readable software code, though it should be appreciated that the various operations can be performed by one or more computing devices or processors. The process 200 can include a series of operations based on various features associated with an incoming update request.

At operation 202, the server can receive a natural language query. The received query can be in the form of a structured object, including a query string and an associated metric string for execution. For example, the server can receive the query "how many voluntary terminations for female employees in California happened last month?" with the associated metric "Terminations."

At operation 204, the server can execute an entity recognition (ER) model 210, which can be similar to the ER model 138 described in connection with FIG. 1. The ER model 210 can parse the received query and extract a set of entity-action pairs corresponding to candidate filter terms and their associated inclusion or exclusion intent. For example, the query may yield extracted entities such as "voluntary terminations," "female managers," and "California." Each entity can be annotated with an "INCLUSION" action. The extracted entity-action pairs can be output in a structured format and passed to subsequent components for further processing.

At operation 206, the server can execute a vector index model 212, which can be similar to the field value retrieval components, such as the filter value identifier 120 and the relevance scoring model 138, described in connection with FIG. 1. The vector index model 212 can identify and retrieve candidate filter values from a database. The candidate filter values can correspond to the entities identified at operation 204. The vector index model 212 can perform a hybrid search that includes keyword-based retrieval using a lexical relevance algorithm and semantic search using vector-based similarity measures. The vector index model 212 can be distinct from a later-executed relevance model 216 that classifies candidate filter values according to contextual relevance categories responsive to retrieval or post-processing of the candidate filter values. Each candidate filter value can be associated with a filter category and a respective relevance score. For example, for the entity "voluntary terminations," the vector index model 212 can retrieve candidate filter values under the filter category "Termination Type," such as "Voluntary" with a relevance score of 1.0 and "Involuntary" with a relevance score of 0.94.

At operation 208, the server can execute a post-processing filterer 214, which can be similar to the filter evaluator 122 described in connection with FIG. 1. The post-processing filterer 214 can refine the candidate filter values retrieved by the vector index model 212 by applying threshold-based logic. The post-processing filterer 214 can reduce noise by removing duplicate filter values across entities, sorting filter values by relevance, and discarding those with lower relevance scores. The refined output can be provided to downstream components, such as a ranking model or query generator, to support query formulation. For example, the server can execute a relevance model 216, which can be similar to the relevance model 138 described in connection with FIG. 1. The relevance model 216 can further process the candidate filter values by ranking or classifying them based on their contextual relevance to the user query. The ranked filter values can be used to generate a structured query for execution on the database, and the resulting output can be provided to the client device for display.

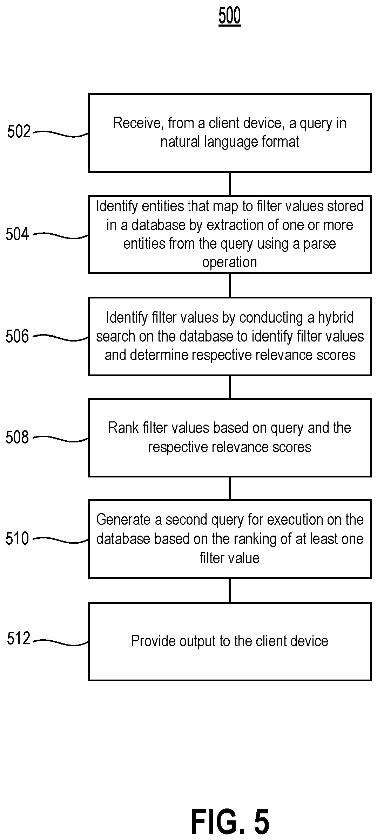

FIG. 5 depicts a method 500 of processing a natural language query with hybrid search and ranked filtering. The method 500 can be implemented using one or more systems or components depicted in FIG. 1 or FIG. 6, including, for example, data processing system 102 or computing system 600. The method 500 can include operations 502-512. The operations 502-512 can be executed in any order or sequence.

At 502, the method 500 can include receiving, from a client device, a query in natural language format. The method can include receiving the query for execution on a database.

At 504, the method 500 can include identifying entities that map to filter values stored in a database by extraction of one or more entities from the query using a parse operation. The method can include parsing the query to identify one or more entities that map to one or more filter values established for the one or more entities in the database. The method can include parsing the query by a machine learning model to identify the one or more entities that map to the one or more filter values. The method can include validating a model output of the machine learning model against a schema specifying fields corresponding to the one or more entities and an action type. The method can include resubmitting the query to the machine learning model in response to the model output not satisfying the schema to cause the machine learning model to generate a second model output satisfying the schema. The method can also include generating, by the machine learning model, a second model output satisfying the schema by resubmitting the query to the machine learning model in response to the model output not satisfying the schema.

At 506, the method 500 can include identifying filter values by conducting a hybrid search on the database to identify filter values and determine respective relevance scores. The hybrid search can include a keyword-based search to identify a set of filter values respectively associated with the one or more entities. The hybrid search can include a semantic-based search to determine a respective relevance score for each filter value of the set of filter values with respect to the query. The method can include determining the respective relevance score for each filter value based on a weighted combination of the keyword-based search and the semantic-based search executed during the hybrid search. In some cases, the keyword-based search can contribute a higher weight to the respective relevance score based on the query corresponding to lexical identity with the filter value. In some cases, the semantic-based search can contribute a higher weight to the respective relevance score based on the query, including semantic equivalents relevant to the filter value.

The method can include generating, for each of a plurality of filter values established in the database, a text string by concatenating a corresponding filter category and the filter value. The method can include generating a respective vector embedding for each text string. The method can include storing the respective vector embeddings in a search index in association with metadata, where the semantic-based search can be executed on the search index based on the respective vector embeddings.

The method can include normalizing, prior to determining the respective relevance score for each filter value of the set of filter values, a first score obtained from the keyword-based search and a second score obtained from the semantic-based search. The method can include generating, for each of the one or more entities identified from the query, a respective keyword query. The method can include retrieving, from the database, one or more filter values for each of the one or more entities using the respective keyword query. The method can include storing an association between each retrieved filter value and the entity corresponding to the respective keyword query. The method can include removing, from the set of filter values, one of a first filter value or a second filter value having a same value prior to ranking each filter value of the set of filter values. Removing the one of the first filter value or the second filter value can reduce a number of candidate filter values processed during execution of the second query.

At 508, the method 500 can include ranking filter values based on the query and the respective relevance scores. The method can include ranking each filter value of the set of filter values based on the query and the respective relevance score. The method can include ranking each filter value of the set of filter values into a first rank, a second rank, and a third rank. Each rank can correspond to a respective range of relevance scores with respect to the query.

The method can include selecting, for inclusion in the first rank, one or more filter values having respective relevance scores that exceed a first threshold indicative of a highest relevance to the query. The method can include selecting, for inclusion in the second rank, one or more filter values having respective relevance scores that are between the first threshold and a second threshold, where the second threshold is lower than the first threshold. The method can include selecting, for inclusion in the third rank, one or more filter values having respective relevance scores that are below the second threshold.

At 510, the method 500 can include generating a second query for execution on the database based on the ranking of at least one filter value. The method can include generating the second query for execution on the database using the one or more filter values included in the first rank. The second query based on the rank can reduce a number of candidate filter values processed during execution of the second query compared to the query received in the natural language format from the client device. The method can include generating, upon receiving user input indicating inclusion of the one or more filter values identified in a content item, a second query for execution on the database using the one or more filter values. The method can include excluding the one or more filter values included in a third rank from use in generating the second query for execution on the database.

The method can include mapping each filter value, for generating the second query, to at least one of a database field identifier, a filter category code, or a filter value code. The method can include determining, for each mapped filter value, an associated action indicating inclusion of the mapped filter value. The method can include generating the second query to include one or more query conditions including the mapped filter value according to the associated action. The method can include determining, for each mapped filter value, an associated action indicating exclusion of the mapped filter value. The method can include generating the second query to include one or more query conditions excluding the mapped filter value according to the associated action. The method can include generating the second query such that the second query comprises one or more query conditions excluding the mapped filter value according to the associated action.

At 512, the method 500 can include providing output to the client device. The method can include providing, to the client device for display, an output including data retrieved from the database upon executing the second query. The method can include providing, to the client device, a content item identifying the one or more filter values included in the second rank. The content item can include, for each of the one or more filter values included in the second rank, a corresponding filter identifier and an indication of the second rank. The content item can be provided to the client device as at least one of a textual list or an interactive element. The method can include, in response to assignment of at least one filter value to the second rank, requesting user confirmation before executing the second query, unless prior user confirmations or one or more confidence rules indicate that the filter value is automatically includable.

FIG. 6 depicts a block diagram of a computing system 600 for implementing the embodiments of the technical solutions discussed herein, in accordance with various aspects. FIG. 6 illustrates a block diagram of an example computing system 600, which can also be referred to as the computer system 600. Computing system 600 can be used to implement elements of the systems and methods described and illustrated herein. Computing system 600 can be included in and run any device (e.g., a server, a computer, a cloud computing environment, or a data processing system).

Computing system 600 can include at least one bus data bus 605 or other communication device, structure, or component for communicating information or data. Computing system 600 can include at least one processor 610 or processing circuit coupled to the data bus 605 for executing instructions or processing data or information. Computing system 600 can include one or more processors 610 or processing circuits coupled to the data bus 605 for exchanging or processing data or information along with other computing systems 600. Computing system 600 can include one or more main memories 615, such as a random access memory (RAM), dynamic RAM (DRAM), cache memory or other dynamic storage device, which can be coupled to the data bus 605 for storing information, data and instructions to be executed by the processor(s) 610. Main memory 615 can be used for storing information (e.g., data, computer code, commands, or instructions) during execution of instructions by the processor(s) 610.

Computing system 600 can include one or more read only memories (ROMs) 620 or other static storage device 625 coupled to the bus 605 for storing static information and instructions for the processor(s) 610. Storage devices 625 can include any storage device, such as a solid-state device, magnetic disk, or optical disk, which can be coupled to the data bus 605 to persistently store information and instructions.

Computing system 600 can be coupled via the data bus 605 to one or more output devices 635, such as speakers or displays (e.g., liquid crystal display or active matrix display) for displaying or providing information to a user. Input devices 630, such as keyboards, touch screens or voice interfaces, can be coupled to the data bus 605 for communicating information and commands to the processor(s) 610. Input device 630 can include, for example, a touch screen display (e.g., output device 635). Input device 630 can include a cursor control, such as a mouse, a trackball, or cursor direction keys, for communicating direction information and command selections to the processor(s) 610 for controlling cursor movement on a display.

The processes, systems and methods described herein can be implemented by the computing system 600 in response to the processor 610 executing an arrangement of instructions contained in main memory 615. Such instructions can be read into main memory 615 from another computer-readable medium, such as the storage device 625. Execution of the arrangement of instructions contained in main memory 615 causes the computing system 600 to perform the illustrative processes described herein. One or more processors 610 in a multi-processing arrangement can also be employed to execute the instructions contained in main memory 615. Hard-wired circuitry can be used in place of or in combination with software instructions, together with the systems and methods described herein. Systems and methods described herein are not limited to any specific combination of hardware circuitry and software.

Although an example computing system has been described in FIG. 6, the subject matter, including the operations described in this specification, can be implemented in other types of digital electronic circuitry, or in computer software, firmware, or hardware, including the structures disclosed in this specification and their structural equivalents, or in combinations of one or more of them.

The foregoing examples have been provided merely for the purpose of explanation and are in no way to be construed as limiting of the present disclosure. While aspects of the present disclosure have been described with reference to an exemplary embodiment, it is understood that the words which have been used herein are words of description and illustration, rather than words of limitation. Changes can be made, within the purview of the appended claims, as presently stated and as amended, without departing from the scope and spirit of the present disclosure in its aspects. Although aspects of the present disclosure have been described herein with reference to particular means, materials and embodiments, the present disclosure is not intended to be limited to the particulars disclosed herein; rather, the present disclosure extends to all functionally equivalent structures, methods and uses, such as are within the scope of the appended claims.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively, or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device," "component" or "data processing apparatus" or the like encompass various apparatuses, devices, and machines for processing data, including, by way of example, a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media, and memory devices, including, by way of example, semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements, and features discussed in connection with one implementation are not intended to be excluded from a similar role in other implementations.

The phraseology and terminology used herein is for the purpose of description and should not be regarded as limiting. The use of "including," "comprising," "having," "containing," "involving," "characterized by," "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

References to "or" can be construed as inclusive so that any terms described using "or" can indicate any of a single, more than one, and all of the described terms. References to at least one of a conjunctive list of terms can be construed as an inclusive OR to indicate any of a single, more than one, and all of the described terms. For example, a reference to "at least one of 'A' and 'B'" can include only 'A,' only 'B,' as well as both 'A' and 'B.' Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as substitutions, changes and omissions can be made in the design, operating conditions and arrangement of the disclosed elements and operations without departing from the scope of the present disclosure.

## Claims

1. A system for processing a natural language query, comprising:
one or more processors, coupled with memory, to:
receive, from a client device, a query in a natural language format for execution on a database;
identify one or more entities that map to one or more filter values stored in the database by extraction of one or more entities from the query using a parse operation;
identify the one or more filter values by conducting a hybrid search on the database, the hybrid search comprising:
a keyword-based search to identify a set of filter values respectively associated with the one or more entities, and
a semantic-based search to determine a respective relevance score for each filter value of the set of filter values with respect to the query;
rank each filter value of the set of filter values based on the query and the respective relevance score;
generate, based on the rank of at least one filter value, a second query for execution on the database; and
provide, to the client device, an output including data retrieved from the database by executing the second query.

2. The system of claim 1, wherein the one or more processors further:
rank each filter value of the set of filter values into a first rank, a second rank, and a third rank, each rank corresponding to a respective range of relevance scores with respect to the query.

3. The system of claim 2, wherein the one or more processors further:
select for inclusion in the first rank, one or more filter values having respective relevance scores that exceed a first threshold indicative of a highest relevance to the query; and
generate the second query for execution on the database using the one or more filter values included in the first rank.

4. The system of claim 3, wherein the one or more processors further:
select for inclusion in the second rank, one or more filter values having respective relevance scores that are between the first threshold and a second threshold, wherein the second threshold is lower than the first threshold;
provide, to the client device, a content item identifying the one or more filter values included in the second rank; and
generate, upon receiving user input indicating inclusion of the one or more filter values identified in the content item, the second query for execution on the database using the one or more filter values; and optionally
wherein the content item includes, for each of the one or more filter values included in the second rank, a corresponding filter identifier and an indication of the second rank; and further optionally
wherein the one or more processors further:
provide the content item to the client device as at least one of a textual list or an interactive element.

5. The system of claim 4, wherein the one or more processors further:
select, for inclusion in the third rank, one or more filter values having respective relevance scores that are below the second threshold; and
exclude the one or more filter values included in the third rank from use in generating the second query for execution on the database.

6. The system of any preceding claim, wherein the one or more processors further:
determine the respective relevance score for each filter value based on a weighted combination of the keyword-based search and the semantic-based search executed during the hybrid search.

7. The system of claim 6, wherein the keyword-based search contributes a higher weight to the respective relevance score based on the query corresponding to lexical identity with the filter value; or
wherein the semantic-based search contributes a higher weight to the respective relevance score based on the query including semantic equivalents relevant to the filter value.

8. The system of any preceding claim, wherein the one or more processors further:
generate, for each of a plurality of filter values established in the database, a text string by concatenating a corresponding filter category and the filter value;
generate a respective vector embedding for each text string; and
store the respective vector embeddings in a search index in association with metadata, wherein the semantic-based search is executed on the search index based on the respective vector embeddings; and/or
wherein the one or more processors further:
normalize, prior to determining the respective relevance score for each filter value of the set of filter values, a first score obtained from the keyword-based search and a second score obtained from the semantic-based search.

9. The system of any preceding claim, wherein the one or more processors further:
generate, for each of the one or more entities identified from the query, a respective keyword query;
retrieve, from the database, one or more filter values for each of the one or more entities using the respective keyword query; and
maintain an association between each retrieved filter value and the entity corresponding to the respective keyword query.

10. The system of any preceding claim, wherein the one or more processors further:
remove, from the set of filter values, one of a first filter value or a second filter value having a same value prior to ranking each filter value of the set of filter values, wherein removing the one of the first filter value or the second filter value reduces a number of candidate filter values processed during execution of the second query.

11. The system of any preceding claim, wherein the one or more processors further:
validate a model output of a machine learning model against a schema specifying fields corresponding to the one or more entities and an action type; and
generate, by the machine learning model, a second model output satisfying the schema by resubmitting the query to the machine learning model in response to the model output not satisfying the schema.

12. The system of any preceding claim, wherein the one or more processors further:
map each filter value, for generating the second query, to at least one of a database field identifier, a filter category code, or a filter value code;
determine, for each mapped filter value, an associated action indicating inclusion of the mapped filter value; and
generate the second query to include one or more query conditions including the mapped filter value according to the associated action.

13. The system of any preceding claim, wherein generating the second query further comprises the one or more processors to:
map each filter value to at least one of a database field identifier, a filter category code, or a filter value code; and
determine, for each mapped filter value, an associated action indicating exclusion of the mapped filter value;
wherein the second query comprises one or more query conditions excluding the mapped filter value according to the associated action.

14. A method of processing a natural language query, comprising:
receiving, from a client device, a query in a natural language format for execution on a database;
identifying one or more entities that map to one or more filter values stored in the database by extraction of one or more entities from the query using a parse operation;
identifying the one or more filter values by conducting a hybrid search on the database, the hybrid search comprising:
a keyword-based search to identify a set of filter values respectively associated with the one or more entities, and
a semantic-based search to determine a respective relevance score for each filter value of the set of filter values with respect to the query;
ranking each filter value of the set of filter values based on the query and the respective relevance score;
generating, based on the rank of at least one filter value, a second query for execution on the database; and
providing, to the client device, an output including data retrieved from the database by executing the second query; and optionally
the method further comprising:
ranking each filter value of the set of filter values into a first rank, a second rank, and a third rank, each rank corresponding to a respective range of relevance scores with respect to the query.

15. A non-transitory computer readable medium including one or more instructions stored thereon and executable by a processor to:
receive, from a client device, a query in a natural language format for execution on a database;
identify one or more entities that map to one or more filter values stored in the database by extraction of one or more entities from the query using a parse operation;
identify the one or more filter values by conducting a hybrid search on the database, the hybrid search comprising:
a keyword-based search to identify a set of filter values respectively associated with the one or more entities, and
a semantic-based search to determine a respective relevance score for each filter value of the set of filter values with respect to the query;
rank each filter value of the set of filter values based on the query and the respective relevance score;
generate, based on the rank of at least one filter value, a second query for execution on the database; and
provide, to the client device, an output including data retrieved from the database by executing the second query.
